# EUROPÄISCHE PATENTSCHRIFT

(11) **EP 2 782 714 B1**
(45) Veröffentlichungstag und Bekanntmachung des Hinweises auf die Patenterteilung: **04.08.2021**
(21) Anmeldenummer: 12786935.2
(22) Anmeldetag: 07.11.2012
(51) Int. Cl.: H01M 10/00

(54) **SYSTEM MIT EINEM HANDWERKZEUGKOFFER UND EINEM HANDWERKZEUGAKKU**
SYSTEM COMPRISING A CASING FOR A HAND-HELD TOOL AND A HAND-HELD TOOL BATTERY
SYSTÈME COMPRENANT UNE MALLETTE POUR MACHINE-OUTIL PORTATIVE ET UN ACCUMULATEUR DE MACHINE-OUTIL PORTATIVE

(30) Priorität: 22.11.2011 DE 102011086799
(43) Veröffentlichungstag der Anmeldung: 01.10.2014
(73) Patentinhaber: Robert Bosch GmbH, 70442 Stuttgart (DE)
(72) Erfinder: REJMAN, Marcin, 71332 Waiblingen (DE); MACK, Juergen, 73035 Goeppingen (DE)
(86) Internationale Anmeldenummer: PCT/EP2012/072020
(87) Internationale Veröffentlichungsnummer: WO 2013/075944

(56) Entgegenhaltungen:
- DE-A1-102006 061 270
- DE-A1-102009 000 392
- US-A1- 2006 108 984
- US-A1- 2008 035 507
- US-A1- 2009 212 737
- US-A1- 2010 231 161
- US-A1- 2011 005 951

## Beschreibung

### Stand der Technik

Es ist bereits ein System mit einem Handwerkzeugkoffer und einem Handwerkzeugakku vorgeschlagen worden.

Aus US 2009/0212737 A1 ist ein Werkzeugkoffer für Handwerkzeugmaschinen bekannt, der zum induktiven Laden von Akkupacks der Handwerkzeugmaschinen ausgebildet ist. Andere Beispiele sind aus der US2006108984A1 und US2011005951 A1 bekannt.

### Offenbarung der Erfindung

Die Erfindung betrifft ein System mit einem Handwerkzeugakku, der vorzugsweise dazu vorgesehen ist, induktiv geladen zu werden, mit einem Handwerkzeugkoffer, der zumindest einen Induktivladeaufnahmebereich aufweist, der dazu vorgesehen ist, einen in den Induktivladeaufnahmebereich eingelegten Handwerkzeugakku zumindest teilweise in einem Nahbereich zumindest einer Wandung des Handwerkzeugkoffers zu lagern, und mit zumindest einer Latentwärmespeichereinheit, die dazu vorgesehen ist, zumindest eine Temperatur des Handwerkzeugakkus zu beeinflussen.

Unter einem "Handwerkzeugkoffer" soll insbesondere ein Transportbehältnis verstanden werden, das dazu vorgesehen ist, zumindest einen Handwerkzeugakku und vorzugsweise zumindest ein Handwerkzeug aufzunehmen. Insbesondere weist der Handwerkzeugkoffer eine zumindest im Wesentlichen quaderartige Form auf. Darunter, dass ein Objekt "im Wesentlichen quaderartig" ausgebildet ist, soll insbesondere verstanden werden, dass es zumindest einen Quader gibt, der komplett innerhalb des Objekts liegt und zumindest 70 %, insbesondere zumindest 80 %, vorteilhaft zumindest 90 %, vorzugsweise zumindest 95 %, der Punkte des Objekts umfasst. Insbesondere weist der Handwerkzeugkoffer in zumindest einer Haupterstreckungsrichtung, der "Höhe", eine Ausdehnung auf, die maximal 70 %, insbesondere maximal 50 %, vorteilhaft maximal 30 %, vorzugsweise maximal 10 % einer Ausdehnung entlang einer weiteren Haupterstreckungsrichtung, der "Breite", entspricht. Unter einer "Haupterstreckungsrichtung" soll insbesondere eine Richtung verstanden werden, die zumindest im Wesentlichen parallel zu einer Hauptträgheitsachse liegt. Vorzugsweise stehen zwei Haupterstreckungsrichtungen senkrecht aufeinander. Vorzugsweise weist der Handwerkzeugkoffer entlang der Breite eine Ausdehnung von zumindest 20 cm, insbesondere zumindest 25 cm, vorteilhaft zumindest 35 cm, und maximal 80 cm, insbesondere maximal 70 cm, vorteilhaft maximal 50 cm, auf. Vorzugsweise weist der Handwerkzeugkoffer entlang der Höhe eine Ausdehnung von zumindest 5 cm, insbesondere zumindest 7 cm, vorteilhaft zumindest 9 cm, und maximal 20 cm, insbesondere maximal 15 cm, vorteilhaft maximal 12 cm, auf. Insbesondere weist der Handwerkzeugkoffer zumindest zwei Gehäuseteile auf, die eine äußere Begrenzung des Handwerkzeugkoffers bilden. Insbesondere sind die Gehäuseteile über einen Scharnier- und/oder einen Schiebemechanismus miteinander verbunden. Insbesondere ist zumindest eines der Gehäuseteile als Schale ausgebildet und dazu vorgesehen, gemeinsam mit zumindest einem Innenraumstrukturierungselement, das in dem als Schale ausgebildeten Gehäuseteil angeordnet ist und/oder einstückig mit diesem ausgebildet ist, zumindest einen Induktivladeaufnahmebereich bereitzustellen. Insbesondere ist zumindest eines der Gehäuseteile als Deckel ausgebildet. Unter einem "Deckel" soll insbesondere ein Gehäuseteil verstanden werden, das dazu vorgesehen ist, den Handwerkzeugkoffer zu schließen. Insbesondere ist der Deckel dazu vorgesehen, zumindest in geschlossenem Zustand, ein Be- und/oder Entladen des Handwerkzeugkoffers zu vermeiden. Unter einem "geschlossenen" Zustand soll insbesondere ein Zustand verstanden werden, in dem der Deckel mit zumindest einem weiteren Gehäuseteil, das sich vorzugsweise von einem Deckel unterscheidet, weitestgehend unbeweglich, vorzugsweise formschlüssig, insbesondere über einen Rastmechanismus, verbunden ist. Insbesondere sind die Gehäuseteile dazu vorgesehen, den Handwerkzeugkoffer wasserdicht abzuschließen. Insbesondere weist der Handwerkzeugkoffer zumindest ein, insbesondere von zumindest einem Dichtgummi gebildetes, Dichtelement auf, das dazu vorgesehen ist, zwischen den Gehäuseteilen, vorzugsweise zwischen aufeinanderstoßenden Kanten der Gehäuseteile, angeordnet zu werden.

Weiterhin sind Ausgestaltungen denkbar, in denen das System anstatt eines Handwerkzeugkoffers einen Werkzeuggürtel, insbesondere ein Werkzeugholster, aufweist, der dazu vorgesehen ist, zumindest einen Handwerkzeugakku und/oder zumindest eine Handwerkzeugmaschine mit gekoppeltem Handwerkzeugakku zu transportieren und/oder zu halten und eine induktive Ladung zumindest eines Handwerkzeugakkus zu ermöglichen.

Insbesondere weist der Handwerkzeugkoffer an zumindest einer Mantelfläche einen Henkel auf, der insbesondere dazu vorgesehen ist, den Handwerkzeugkoffer in einer vertikalen Orientierung, in der die Höhe des Handwerkzeugkoffers zumindest im Wesentlichen parallel zum Horizont orientiert ist, zu tragen und/oder aufzuhängen. Insbesondere weist der Handwerkzeugkoffer zumindest einen an einer Oberseite, insbesondere am Deckel, angeordneten Henkel und/oder zumindest zwei, jeweils an gegenüberliegenden Mantelflächen angeordnete Henkel auf, die insbesondere dazu vorgesehen sind, den Handwerkzeugkoffer in horizontaler Orientierung, in der die Höhe des Handwerkzeugkoffers zumindest im Wesentlichen senkrecht zum Horizont orientiert ist, zu tragen und/oder aufzuhängen. Unter "im Wesentlichen parallel" soll insbesondere ein Winkel kleiner als 30°, insbesondere kleiner als 15°, vorteilhaft kleiner als 5°, vorzugsweise kleiner als 1°, verstanden werden. Unter "im Wesentlichen senkrecht" soll insbesondere ein Winkel verstanden werden, der weniger als 30°, insbesondere weniger als 15°, vorteilhaft weniger als 5°, vorzugsweise weniger als 1°, von 90° abweicht. Insbesondere sind die Henkel schwenkbar und vorzugsweise in den Handwerkzeugkoffer versenkbar ausgebildet. Unter einer "Mantelfläche" soll insbesondere eine Fläche verstanden werden, die zumindest im Wesentlichen parallel zur Höhe orientiert ist.

Unter einem "Induktivladeaufnahmebereich" soll insbesondere ein Aufnahmebereich des Handwerkzeugkoffers verstanden werden, der dazu vorgesehen ist, zumindest einen Handwerkzeugakku aufzunehmen und ein induktives Laden eines in den Induktivladeaufnahmebereich eingelegten Handwerkzeugakkus zu unterstützen. Insbesondere ist der Induktivladeaufnahmebereich dazu vorgesehen, ein Laden des Handwerkzeugakkus mit einer Effizienz von zumindest 70 %, insbesondere zumindest 80 %, vorteilhaft zumindest 90 %, vorzugsweise zumindest 95 %, zu erlauben. Insbesondere erlaubt der Induktivladeaufnahmebereich eine induktive Aufladung des Handwerkzeugakkus durch eine Wandung des Handwerkzeugkoffers hindurch. Insbesondere ist der Induktivladeaufnahmebereich korrespondierend zu einem Induktivladeaufnahmebereich einer als Handwerkzeugkofferhaltevorrichtung ausgebildeten Ladestation ausgebildet. Insbesondere ist der Induktivladeaufnahmebereich dazu vorgesehen, einen Handwerkzeugakku aufzunehmen, der mit einem Handwerkzeug mechanisch verbunden und/oder in ein Handwerkzeug integriert ist. Vorzugsweise sind die Gehäuseteile zumindest in einem Nahbereich des Induktivladeaufnahmebereichs aus einem isolierenden Material gefertigt, um geringe Verluste bei einer Energieübertragung durch Induktion zu erreichen.

Unter "vorgesehen" soll insbesondere speziell ausgelegt und/oder ausgestattet verstanden werden. Darunter, dass ein Handwerkzeugakku dazu vorgesehen ist, "induktiv" geladen zu werden, soll insbesondere verstanden werden, dass der Handwerkzeugakku zumindest eine Ladespule aufweist. Weiterhin weist der Handwerkzeugakku zumindest eine Koppelstelle auf, die dazu vorgesehen ist, den Handwerkzeugakku mechanisch mit einem Handwerkzeug zu verbinden. Insbesondere ist die Koppelstelle Teil eines Rast- und/oder Drehmechanismus. Unter einer "Ladespule" soll insbesondere eine Spule mit zumindest einem gewundenen, insbesondere gewickelten, elektrischen Leiter verstanden werden, die dazu vorgesehen ist, in zumindest einem Betriebszustand eine Energie zum Laden und/oder Entladen, insbesondere zumindest einer, vorzugsweise elektrochemischen, Energiespeichereinheit des Handwerkzeugakkus, zu senden und/oder vorzugsweise zu empfangen. Vorzugsweise ist die Ladespule dazu vorgesehen, einen elektrischen Wechselstrom in ein magnetisches Wechselfeld umzuwandeln und/oder umgekehrt. Insbesondere ist die Ladespule dazu vorgesehen, empfangene Energie direkt, insbesondere über einen Spannungswandler, einem Verbraucher zuzuführen. Vorzugsweise weist ein System mit einem Handwerkzeugakku und mit einem Ladegerät und/oder einem Handwerkzeug zumindest zwei aufeinander abgestimmte, von einem Bediener räumlich trennbare Ladespulen auf, wovon in zumindest einem Betriebszustand zumindest eine Ladespule dazu vorgesehen ist, ein magnetisches Wechselfeld zu erzeugen, das in zumindest einer weiteren Ladespule einen elektrischen Wechselstrom induziert. Insbesondere weist der Handwerkzeugakku Elektronik auf, die dazu vorgesehen ist, einen in der Ladespule induzierten Wechselstrom in einen in der Energiespeichereinheit speicherbaren Gleichstrom zu wandeln und/oder einen aus der Energiespeichereinheit bezogenen Gleichstrom in einen Wechselstrom zu wandeln, um die Ladespule damit zu speisen und Energie an eine korrespondierende Ladespule zu übertragen. Darunter, dass der Handwerkzeugakku zumindest "teilweise in einem "Nahbereich" einer Wandung gelagert ist, soll insbesondere verstanden werden, dass zumindest 2 % Vol, insbesondere zumindest 5 % Vol, vorzugsweise zumindest 10 % Vol, des Handwerkzeugakkus, insbesondere zumindest 10 % Vol, vorteilhaft zumindest 30 % Vol, vorzugsweise zumindest 50 % Vol, der Ladespule, maximal 25 mm, insbesondere maximal 20 mm, vorteilhaft maximal 15 mm, vorzugsweise maximal 10 mm, von der Wandung entfernt sind. Unter einer "Wandung" soll insbesondere ein Bestandteil des Handwerkzeugkoffers verstanden werden, der dazu vorgesehen ist, eine Außenbegrenzung des Handwerkzeugkoffers zu bilden. Insbesondere weist die Wandung eine Materialstärke von weniger als 8 mm, insbesondere von weniger als 5 mm, vorteilhaft von weniger als 3 mm, vorzugsweise von weniger als 2 mm, auf. Es kann insbesondere eine effektive Ladung erreicht werden.

Insbesondere soll unter einem "Handwerkzeug" ein, dem Fachmann als sinnvoll erscheinendes Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät, ein Baustellenmessgerät und/oder ein Multifunktionswerkzeug verstanden werden, das vorzugsweise dazu vorgesehen ist, in zumindest einem Betriebszustand von einem Handwerkzeugakku betrieben zu werden.

Unter einer "Latentwärmespeichereinheit" soll insbesondere eine Einheit verstanden werden, die zumindest ein Latentwärmespeicherelement aufweist. Unter einem "Latentwärmespeicherelement" soll insbesondere ein Element verstanden werden, das zumindest ein Latentwärmespeichermaterial und/oder ein Latentwäremespeichermaterialgemisch mit zumindest einer Phasengrenze aufweist, bei deren Überschreiten das Latentwärmespeichermaterial je Masseneinheit eine Wärmemenge aufnimmt oder abgibt, die zumindest fünfmal, insbesondere zumindest zehnmal, vorteilhaft zumindest 20-mal, vorzugsweise zumindest 40-mal, so groß ist wie eine Wärmemenge, die das gleiche Latentwärmespeichermaterial bei einer Erwärmung um 1 K abseits der Phasengrenze aufnimmt. Insbesondere beträgt die Wärmemenge zumindest 60 kJ/kg, insbesondere zumindest 100 kJ/kg, vorteilhaft zumindest 130 kJ/kg, vorzugsweise zumindest 150 kJ/kg. Unter einer "Phasengrenze" soll insbesondere eine, in der Regel druckabhängige Grenztemperatur verstanden werden. Vorzugsweise ist die Grenztemperatur der zumindest einen Phasengrenze des zumindest einen Latentwärmespeichermaterials, zumindest bei einem Normaldruck von 1013 hPa, eine Temperatur größer als -10 °C, insbesondere größer als -5 °C, vorteilhaft größer als 0°C, vorzugsweise größer als 5 °C. Vorzugsweise ist die Grenztemperatur der zumindest einen Phasengrenze zumindest bei Normaldruck kleiner als 60 °C, insbesondere kleiner als 55 °C, vorteilhaft kleiner als 50 °C, vorzugsweise kleiner als 45 °C. Vorzugsweise ist das Latentwärmespeicherelement dazu vorgesehen, bei umgekehrtem Überschreiten der Phasengrenze die aufgenommene bzw. abgegebene Wärme in gleichem Maße wieder abzugeben bzw. aufzunehmen. Vorzugsweise ist die Phasengrenze beliebig häufig reversibel überschreitbar. Vorzugsweise ist die Latentwärmespeichereinheit dazu vorgesehen, bei Überschreiten zumindest einer Phasengrenze eine Wärme von zumindest 5 kJ, insbesondere zumindest 10 kJ, vorteilhaft zumindest 20 kJ, vorzugsweise zumindest 30 kJ aufzunehmen. Insbesondere findet an der Phasengrenze ein Übergang zwischen einem flüssigen Zustand und einem festen Zustand statt. Vorzugsweise weist das zumindest ein Latentwärmespeicherelement in zumindest einer Richtung eine Erstreckung von zumindest 5 mm, insbesondere zumindest 10 mm, vorteilhaft zumindest 20 mm, vorzugsweise zumindest 40 mm, auf. Unter einer "Erstreckung" eines Elements in einer Richtung soll insbesondere eine längste Strecke verstanden werden, die zwei beliebige Punkte des Elements verbindet und parallel zu der Richtung liegt. Vorteilhaft weist die Latentwärmespeichereinheit zumindest 50 g, insbesondere zumindest 100 g, vorteilhaft zumindest 200 g, insbesondere maximal 500 g, Latentwärmespeichermaterial auf. Es kann insbesondere eine ausreichende Temperierung bei möglichst geringem Zusatzgewicht erreicht werden.

Durch die erfindungsgemäße Ausgestaltung kann insbesondere eine hohe Lebensdauer des Handwerkzeugakkus erreicht werden.

Vorteilhaft weist die Latentwärmespeichereinheit zumindest ein Latentwärmespeicherelement auf, das dazu vorgesehen ist, zumindest zeitweise eine Überhitzung des Handwerkzeugakkus zu vermeiden. Unter einer "Überhitzung" des Handwerkzeugakkus soll insbesondere ein Überschreiten einer kritischen Temperatur zumindest eines Bauteils des Handwerkzeugs verstanden werden. Unter einer "kritischen Temperatur eines Bauteils" soll insbesondere eine Temperatur verstanden werden, bei der eine irreversible Veränderung, also eine Veränderung, die autonom nicht umkehrbar ist, insbesondere eine Zerstörung, des Bauteils eintritt. Insbesondere ist die kritische Temperatur durch chemische und/oder physikalische Eigenschaften, beispielsweise eine Siedetemperatur und/oder eine Zersetzungstemperatur, zumindest eines Materials, insbesondere eines Elektrolyts, des Handwerkzeugakkus, insbesondere der Energiespeichereinheit des Handwerkzeugakkus, das vorzugsweise zum elektrischen Energietransport und/oder zur elektrischen Energiespeicherung genutzt wird, bestimmt. Darunter, dass das Latentwärmespeicherelement dazu vorgesehen ist, eine Überhitzung "zu vermeiden", soll insbesondere verstanden werden, dass zumindest ein Latentwärmespeichermaterial des Latentwärmespeicherelements zumindest eine Phasengrenze mit einer Grenztemperatur größer als 30 °C, insbesondere größer als 35 °C, vorteilhaft größer als 40 °C, und kleiner als 60 °C, vorteilhaft kleiner als 55 °C, vorzugsweise kleiner als 50 °C, aufweist. Unter "zeitweise" soll insbesondere verstanden werden, dass eine Vermeidung der Überhitzung maximal für einen Zeitraum verhindert werden kann, der dafür benötigt wird, die Phasengrenze zu überwinden. Der Zeitraum ist zumindest abhängig von einer Menge von Latentwärmespeichermaterial in der Latentwärmespeichereinheit, von einer Höhe eines dem Handwerkzeugakku zugeführten Wärmestroms, der insbesondere durch einen Ladestrom, einen Entladestrom und/oder eine Außentemperatur, insbesondere eine Lufttemperatur außerhalb des Handwerkzeugkoffers, bestimmt ist, und von einer thermischen Isolation des Handwerkzeugakkus im Handwerkzeugkoffer. Vorzugsweise ist die Latentwärmespeichereinheit dazu ausgelegt, ausgehend von einer Temperatur unterhalb der Grenztemperatur für eine Zeitdauer von zumindest einer halben Stunde, insbesondere von zumindest einer Stunde, vorzugsweise von zumindest zwei Stunden, eine Überhitzung zu vermeiden. Die Latentwärmespeichereinheit weist also insbesondere ausreichende Mengen geeigneten Latentwärmespeichermaterials auf, um unter vorhersagbaren Bedingungen, insbesondere Erhitzung durch einen Lade- und/oder Entladestrom, eine Überhitzung zu vermeiden. Insbesondere ist die Latentwärmespeichereinheit dazu vorgesehen, insbesondere ausgehend von einer Temperatur von 30 °C, bis zu einer Temperatur von 50 °C, zumindest 5 kJ, insbesondere zumindest 10 kJ, vorteilhaft zumindest 20 kJ, vorzugsweise zumindest 30 kJ, an Wärme aufzunehmen, um eine Überhitzung zu vermeiden. Insbesondere ist die Latentwärmespeichereinheit dazu vorgesehen, bei einer anzunehmenden Außentemperatur von 70 °C für zumindest eine Stunde, insbesondere zumindest anderthalb Stunden, vorteilhaft zumindest zwei Stunden, vorzugsweise zumindest zweieinhalb Stunden, eine Überhitzung des Handwerkzeugakkus zu verhindern. Es kann insbesondere eine hohe Haltbarkeit des Handwerkzeugakkus erreicht werden. Insbesondere kann ein Laden des Handwerkzeugakkus bei geschlossenem Handwerkzeugkoffer ermöglicht werden, wobei insbesondere auf eine Absenkung eines Ladestroms verzichtet werden kann, um eine Überhitzung des Handwerkzeugakkus zu verhindern. Insbesondere kann eine hohe Selbstentladung des Handwerkzeugakkus durch hohe Temperaturen vermieden werden.

Vorzugsweise weist die Latentwärmespeichereinheit zumindest ein Latentwärmespeicherelement auf, das dazu vorgesehen ist, zumindest zeitweise eine Unterkühlung des Handwerkzeugakkus zu vermeiden. Unter einer "Unterkühlung" des Handwerkzeugakkus soll insbesondere ein Unterschreiten einer Schwelltemperatur zumindest eines Bestandteils des Handwerkzeugakkus verstanden werden. Die Schwelltemperatur ist insbesondere durch eine chemische und/oder physikalische Eigenschaft, insbesondere eine Gefriertemperatur, vorzugsweise eine Untergrenze einer Elektronen- und/oder lonenmobilität, zumindest eines Materials des Handwerkzeugakkus, insbesondere eines Elektrolyts, das vorzugsweise zum elektrischen Energietransport und/oder zur elektrischen Energiespeicherung genutzt wird, bestimmt. Insbesondere weist ein in der Energiespeichereinheit eingesetzter Elektrolyt unter der Schwelltemperatur eine lonenmobilität auf, die kleiner ist als ein Wert, der nötig ist, um einen Ladestrom zu tragen, der in maximal acht Stunden, insbesondere maximal fünf Stunden, vorzugsweise maximal drei Stunden, eine vollständige Ladung des Handwerkzeugakkus erlaubt. Darunter, dass das Latentwärmespeicherelement dazu vorgesehen ist, "eine Unterkühlung zu vermeiden", soll insbesondere verstanden werden, dass zumindest ein Latentwärmespeichermaterial des Latentwärmespeicherelements zumindest eine Phasengrenze mit einer Grenztemperatur kleiner als 30 °C, insbesondere kleiner als 20 °C, vorteilhaft kleiner als 10 °C, und größer als -10 °C, vorteilhaft größer als -5 °C, vorzugsweise größer als 0 °C, aufweist. Unter "zeitweise" soll insbesondere verstanden werden, dass eine Vermeidung der Unterkühlung maximal für einen Zeitraum verhindert werden kann, der dafür benötigt wird, die Phasengrenze zu überwinden. Der Zeitraum ist zumindest abhängig von einer Menge von Latentwärmespeichermaterial in der Latentwärmespeichereinheit, von einer Höhe eines dem Handwerkzeugakku zugeführten Wärmestroms, der insbesondere durch eine Außentemperatur, insbesondere eine Lufttemperatur außerhalb des Handwerkzeugkoffers bestimmt ist, und von einer thermischen Isolation des Handwerkzeugakkus im Handwerkzeugkoffer. Vorzugsweise ist die Latentwärmespeichereinheit dazu ausgelegt, ausgehend von einer Temperatur der Latentwärmespeichereinheit oberhalb der Grenztemperatur, für eine Zeitdauer von zumindest zwei Stunden, insbesondere zumindest drei Stunden, vorteilhaft zumindest fünf Stunden, vorzugsweise zumindest acht Stunden, eine Unterkühlung zu vermeiden. Die Latentwärmespeichereinheit weist also insbesondere ausreichende Mengen geeigneten Latentwärmespeichermaterials auf, um unter vorhersagbaren Bedingungen, insbesondere Abkühlung durch niedrige Außentemperaturen wie beispielsweise im Winter, insbesondere unter 0 °C, vorteilhaft unter 5 °C, vorzugsweise unter 10 °C, eine Unterkühlung zu vermeiden. Insbesondere ist die Latentwärmespeichereinheit dazu vorgesehen, insbesondere ausgehend von einer Temperatur von 30 °C, zumindest 10 kJ, insbesondere zumindest 20 kJ, vorteilhaft zumindest 30 kJ an Wärme abzugeben, um eine Unterkühlung zu vermeiden. Es kann insbesondere eine schnelle und/oder effiziente Ladung des Handwerkzeugakkus erreicht werden. Insbesondere kann eine Beschädigung des Handwerkzeugakkus vermieden werden. Insbesondere kann eine hohe Haltbarkeit des Handwerkzeugakkus erreicht werden. Insbesondere kann eine Einsatzfähigkeit des Handwerkzeugakkus, auch bei einer Lagerung des Handwerkzeugkoffers samt Handwerkzeugakku in einem zumindest im Wesentlichen und/oder zumindest über Nacht unbeheizten Raum, insbesondere einem Lade- und/oder Kofferraum eines KFZs, insbesondere eines PKWs, in einer Garage, einem Lagerraum, einer Werkstatt, insbesondere im Winter und/oder in klimatisch bedingt langzeitlich kalten Gebieten, gewährleistet werden.

Weist die Latentwärmespeichereinheit sowohl Latentwärmespeichermaterial, das dazu vorgesehen ist, eine Unterkühlung zu vermeiden, als auch Latentwärmespeichermaterial auf, das dazu vorgesehen ist, eine Überhitzung zu vermeiden, ist vorteilhaft ein Anteil an Überhitzung vermeidendem Latentwärmespeichermaterial größer als 40 %, insbesondere größer als 50 %, vorteilhaft größer als 60 %.

Ferner wird vorgeschlagen, dass die Latentwärmespeichereinheit zumindest ein Latentwärmespeicherelement aufweist, das in dem Handwerkzeugakku angeordnet ist. Darunter, dass das Latentwärmespeicherelement "in dem Handwerkzeugakku" angeordnet ist, soll insbesondere verstanden werden, dass das Latentwärmespeicherelement insbesondere über einen Formschluss, insbesondere zumindest über ein drittes Element, mit einer Energiespeichereinheit des Handwerkzeugakkus verbunden ist. Insbesondere ist das Latentwärmespeicherelement gemeinsam mit der Energiespeichereinheit in einem Handwerkzeugakkugehäuse angeordnet. Alternativ ist das Latentwärmespeicherelement dazu vorgesehen, zumindest einen Teil des Handwerkzeugakkugehäuses zu bilden. Es kann insbesondere eine effiziente Beeinflussung der Temperatur des Handwerkzeugakkus erreicht werden. Insbesondere kann ein geringer Wärmeübergangskoeffizient von dem Handwerkzeugakku, insbesondere von temperaturempfindlichen Teilen des Handwerkzeugakkus, insbesondere der Energiespeichereinheit, zu dem Latentwärmespeicherelement erreicht werden. Vorzugsweise ist das in dem Handwerkzeugakku angeordnete Latentwärmespeicherelement dazu vorgesehen, eine Überhitzung zu verhindern. Es kann insbesondere eine Überhitzung durch hohe Entladeströme vermieden oder zumindest verzögert werden. Es kann insbesondere zumindest eine lange Zeit, vorzugsweise komplett, auf eine Leistungsdrosselung eines mit dem Handwerkzeugakku betriebenen Handwerkzeugs verzichtet werden.

Weiterhin wird vorgeschlagen, dass die Latentwärmespeichereinheit zumindest ein Latentwärmespeicherelement aufweist, das zumindest teilweise in einem Nahbereich zumindest teilweise um den zumindest einen Induktivladeaufnahmebereich angeordnet ist. Insbesondere ist das Latentwärmespeicherelement dazu vorgesehen, den Induktivladeaufnahmebereich zumindest teilweise zu begrenzen. Darunter, dass das Latentwärmespeicherelement "zumindest teilweise in einem Nahbereich um den Induktivladeaufnahmebereich" angeordnet ist, soll insbesondere verstanden werden, dass zumindest 30 % Vol, insbesondere zumindest 50 % Vol, vorteilhaft zumindest 70 % Vol, des Latentwärmespeicherelements maximal 5 cm, insbesondere maximal 3 cm, vorteilhaft maximal 2 cm, von einem in den Induktivladeaufnahmebereich eingelegten Handwerkzeugakku entfernt sind, wobei das Latentwärmespeicherelement sich von einem Latentwärmespeicherelement unterscheidet, das in dem Handwerkzeugakku angeordnet ist. Vorzugsweise ist das in einem Nahbereich um den Induktivladeaufnahmebereich angeordnete Latentwärmespeicherelement dazu vorgesehen eine Überhitzung des Handwerkzeugakkus zu vermeiden. Es kann insbesondere eine effiziente Wärmeübertragung zwischen dem Handwerkzeugakku und der Latentwärmespeichereinheit erreicht werden. Insbesondere kann ein geringes Gewicht des Handwerkzeugakkus im Vergleich zu einer zuvor genannten Ausgestaltung erreicht werden.

Ferner wird vorgeschlagen, dass die Latentwärmespeichereinheit zumindest ein Latentwärmespeicherelement aufweist, das zumindest teilweise in einem Nahbereich zumindest einer Wandung des Handwerkzeugkoffers angeordnet ist. Insbesondere sind zumindest 30 %, insbesondere zumindest 50 %, vorteilhaft zumindest 70 %, vorzugsweise zumindest 90 %, des Latentwärmespeicherelements maximal 5 cm, insbesondere maximal 3 cm, vorteilhaft maximal 2 cm, von der Wandung entfernt. Vorzugsweise sind zumindest in einem geschlossenen Zustand des Handwerkzeugkoffers zumindest 10 %, insbesondere zumindest 20 %, vorteilhaft zumindest 30 %, vorzugsweise zumindest 40 %, eines gesamten Raumwinkels um einen Mittelpunkt, insbesondere einen geometrischen Schwerpunkt, des Induktivladeaufnahmebereichs von zumindest einem Latentwärmespeicherelement umgeben, das in einem Nahbereich zumindest einer Wandung des Handwerkzeugkoffers angeordnet ist. Vorzugsweise ist das in einem Nahbereich einer Wandung angeordnete Latentwärmespeicherelement dazu vorgesehen, eine Unterkühlung des Handwerkzeugakkus zu vermeiden. Es kann insbesondere ein Wärmeübergang durch die Wandung vermindert werden. Vorteilhaft können bisher ungenutzte Bereiche des Handwerkzeugkoffers ausgenutzt werden.

Vorzugsweise ist das zumindest eine Latentwärmespeicherelement dazu vorgesehen, mit zumindest einer Wandung des Handwerkzeugkoffers verbunden zu werden. Insbesondere ist das Latentwärmespeicherelement mit zumindest einer Wandung des Handwerkzeugkoffers, insbesondere stoffschlüssig, vorteilhaft formschlüssig, verbunden. Vorzugsweise weist die Latentwärmespeichereinheit zumindest zwei Latentwärmespeicherelemente auf, wovon zumindest eines dazu vorgesehen ist, den Handwerkzeugakku in einem Gehäuseteil, das insbesondere als Schale ausgebildet ist, zu lagern und zumindest ein anderes dazu vorgesehen ist, mit einem als Deckel ausgebildeten Gehäuseteil des Handwerkzeugkoffers verbunden zu werden. Vorzugsweise ist der Handwerkzeugakku zumindest in geschlossenem Zustand des Handwerkzeugkoffers entlang der Höhe in beiden Richtungen von jeweils zumindest einem Latentwärmespeicherelement umgeben.

Vorteilhaft weist das System zumindest eine Isoliereinheit auf, die das zumindest eine Latentwärmespeicherelement und/oder zumindest den einen Handwerkzeugakku zumindest teilweise umgibt. Unter einer "Isoliereinheit" soll insbesondere eine Einheit verstanden werden, die zumindest ein Isolierelement aufweist. Unter einem "Isolierelement" soll insbesondere ein Element verstanden werden, das dazu vorgesehen ist, einen Wärmestrom zu behindern. Insbesondere weist ein Isolierelement einen Wärmedurchgangskoeffizienten von maximal 5 W/m²K, insbesondere von maximal 2 W/m²K, vorteilhaft von maximal 1 W/m²K, besonders vorteilhaft von maximal 0,3 W/m²K, vorzugsweise von maximal 0,1 W/m²K, auf. Unter einem "Wärmedurchgangskoeffizienten" soll insbesondere ein Verhältnis eines Wärmestroms zu einem Produkt aus einer Wirkungsfläche, durch die der Wärmestrom tritt, und einer Temperaturdifferenz, bei der der Wärmestrom auftritt, verstanden werden. Unter einer "Wirkungsfläche" soll insbesondere eine Fläche einer Projektion des Isolierelements auf die Wandungen des Handwerkzeugkoffers ausgehend von einem Mittelpunkt des Induktivladeaufnahmebereichs verstanden werden. Unter einer "Temperaturdifferenz" soll insbesondere eine Differenz der Außentemperatur zur Temperatur des in den Induktivladeaufnahmebereich eingelegten Handwerkzeugakkus verstanden werden. Vorzugsweise ist das Isolierelement zumindest teilweise aus einem lufthaltigen Material, insbesondere einem Schaumstoff, gebildet. Alternativ sind Ausgestaltungen des Isolierelements als Vakuumelement denkbar. Vorzugsweise ist zumindest in einem Bereich der Wandung, in deren Nahbereich eine Lagerung des Handwerkzeugakkus vorgesehen ist, ein Isolierelement angeordnet, das insbesondere bei eingelegtem Handwerkzeugakku zwischen der Wandung und dem Handwerkzeugakku angeordnet ist. Es kann insbesondere ein Einfluss der Außentemperatur auf eine Temperatur eines eingelegten Handwerkzeugakkus verringert werden. Insbesondere kann eine Verminderung einer Menge von benötigtem Latentwärmespeichermaterial zur Vermeidung einer Unterkühlung erreicht werden.

Weiterhin wird vorgeschlagen, dass das zumindest eine Latentwärmespeicherelement, das dazu vorgesehen ist, eine Unterkühlung zu vermeiden, und das zumindest eine Latentwärmespeicherelement, das dazu vorgesehen ist, eine Überhitzung zu vermeiden, einstückig ausgebildet sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise liegen zumindest zwei Materialien und/oder Materialgemische mit zumindest jeweils einer Phasengrenze in einer Mischung vor und bilden eine Materialmischung mit zumindest zwei Phasengrenzen. Alternativ ist es denkbar, dass das Latentwärmespeicherelement ein einzelnes Latentwärmespeichermaterial mit zumindest zwei geeignet liegenden Phasengrenzen aufweist. Es kann insbesondere eine einfache Konstruktion erreicht werden.

Ferner wird vorgeschlagen, dass das zumindest eine Latentwärmespeicherelement, das dazu vorgesehen ist, eine Unterkühlung zu vermeiden, zumindest den einen Handwerkzeugakku und/oder das zumindest eine Latentwärmespeicherelement, das dazu vorgesehen ist, eine Überhitzung zu vermeiden, zumindest teilweise umgibt. Es kann konstruktiv einfach eine Vermeidung einer Überhitzung des Handwerkzeugakkus durch von dem Handwerkzeugakku ausgehende Wärme, beispielsweise verursacht durch einen Lade- und/oder Entladestrom, und eine Vermeidung einer Unterkühlung durch äußere Effekte, wie beispielsweise eine niedrige Außentemperatur, erreicht werden.

Vorteilhaft wird vorgeschlagen, dass die Latentwärmespeichereinheit zumindest ein Latentwärmespeicherelement aufweist, das dazu vorgesehen ist, Wärme durch einen Schmelzvorgang aufzunehmen oder abzugeben. Unter einem "Schmelzvorgang" soll insbesondere ein Vorgang verstanden werden, bei dem ein Material seine Phase von fest zu flüssig verändert, vorzugsweise ohne dabei seine chemischen Eigenschaften zu verändern. Insbesondere unterscheidet sich ein Schmelzvorgang von einem Lösungsprozess. Vorzugsweise ist das Latentwärmespeichermaterial als ein Wachs und/oder Wachsgemisch, insbesondere als Paraffin und/oder Paraffinwachs, ausgebildet. Es kann insbesondere ein einfach zu kontrollierender Phasenübergang erreicht werden. Es kann insbesondere eine gute Einstellbarkeit eines oder mehrerer Phasenübergangspunkte erreicht werden. Insbesondere kann eine gute Umweltverträglichkeit gegenüber Materialien, die einen Lösungsprozess zur Wärmeaufnahme nutzen, erreicht werden.

Alternativ und/oder zusätzlich kann zumindest ein Latentwärmespeicherelement der Latentwärmespeichereinheit dazu vorgesehen sein, Wärme durch einen Lösungsprozess aufzunehmen. Unter einem Lösungsprozess soll insbesondere ein Prozess verstanden werden, bei dem ein fester, vorzugsweise zumindest teilweise kristalliner Stoff in einem flüssigen Medium, insbesondere Wasser, verteilt wird, indem sich die Bindungen zwischen Atomen des Stoffs auflösen. Insbesondere weist das Latentwärmespeicherelement zumindest ein Latentwärmespeichermaterial auf, das von einem hydratisierten Salz, also einem Salz, in dessen Kristallgitter Wasser gebunden ist, gebildet ist. Insbesondere ist das hydratisierte Salz dazu vorgesehen, bei Übersteigen einer bestimmten Grenztemperatur, die eine Phasengrenze kennzeichnet, das im Kristallgitter gebundene Wasser freizusetzen und sich selbst in dem freiwerdenden Wasser zu lösen. Durch Aufnahme von Wärme bei dem endothermen Lösungsprozess wird eine Erwärmung über die Grenztemperatur vermieden, bis zumindest im Wesentlichen das gesamte Latentwärmespeichermaterial gelöst ist. Kühlt sich das Latentwärmespeichermaterial auf und/oder unter die Grenztemperatur ab, kehrt sich der Prozess, insbesondere unterstützt durch dem Latentwärmespeichermaterial zugesetzte Kristallbildner, um, wobei Wärme frei wird, die ein weiteres Absinken der Temperatur verhindert, bis zumindest im Wesentlichen das gesamte Latentwärmespeichermaterial kristallisiert ist. Unter "im Wesentlichen" sollen zumindest 80 %, insbesondere zumindest 90 %, vorteilhaft zumindest 95 %, vorzugsweise zumindest 99 %, verstanden werden. Es kann insbesondere eine hohe spezifische Übergangswärme erreicht werden.

Weiterhin wird vorgeschlagen, dass die Latentwärmespeichereinheit modular aufgebaut ist. Unter einem "modularen" Aufbau soll insbesondere eine Ausgestaltung verstanden werden, in der durch Kombinierbarkeit unterschiedlicher Latentwärmespeicherelemente eine erhöhte Flexibilität hinsichtlich variabler Kenngrößen, beispielsweise zumindest einer Größe des Handwerkzeugakkus und/oder klimatischer und/oder saisonaler Bedingungen, bereitgestellt werden kann.

Insbesondere weist das System zumindest ein zweites Latentwärmespeicherelement auf, das dazu vorgesehen ist, ein erstes Latentwärmespeicherelement der Latentwärmespeichereinheit zu ersetzen, wobei das zweite Latentwärmespeicherelement eine von dem ersten Latentwärmespeicherelement verschiedene Temperaturspezifikation aufweist. Unter einer "Temperaturspezifikation" soll insbesondere eine Kombination von Phasengrenzen und/oder unterschiedlicher Mengen von Materialien mit unterschiedlichen Phasengrenzen verstanden werden. Insbesondere ist das erste Latentwärmespeicherelement dazu vorgesehen, eine Unterkühlung des Handwerkzeugakkus zu verhindern, und das zweite Latentwärmespeicherelement dazu vorgesehen, eine Überhitzung des Handwerkzeugakkus zu verhindern. Alternativ weist das erste Latentwärmespeicherelement eine große Menge an Latentwärmespeichermaterial auf, das dazu vorgesehen ist, eine Unterkühlung zu verhindern, und das zweite Latentwärmespeicherelement weist eine große Menge an Latentwärmespeichermaterial auf, das dazu vorgesehen ist, eine Überhitzung zu vermeiden. Darunter, dass ein Latentwärmespeicherelement dazu vorgesehen ist, ein anderes zu "ersetzen", soll insbesondere verstanden werden, dass die Latentwärmespeicherelemente reversibel gegeneinander austauschbar sind. Vorzugsweise weisen sie eine zumindest im Wesentlichen gleiche Form auf. Insbesondere kann eine Anpassung an unterschiedliche klimatisch und/oder saisonal bedingte Außentemperaturen erreicht werden. So kann beispielsweise im Sommer ein Anteil an Latentwärmespeichermaterial, das dazu vorgesehen ist, eine Überhitzung zu vermeiden, erhöht werden, während im Winter ein Anteil an Latentwärmespeichermaterial, das dazu vorgesehen ist, eine Unterkühlung zu vermeiden, erhöht wird. Insbesondere kann in Abhängigkeit von einer zu erwartenden Außentemperatur eine geeignete Auswahl an einzusetzenden Latentwärmespeicherelementen getroffen werden.

Insbesondere sind die Latentwärmespeicherelemente in Abhängigkeit von ihrer Temperaturspezifikation durch unterschiedliche Färbung gekennzeichnet.

Vorteilhaft weist die Latentwärmespeichereinheit zumindest ein Latentwärmespeicherelement auf, das der Latentwärmespeichereinheit entnommen werden kann und/oder dessen Position in der Latentwärmespeichereinheit verändert werden kann. Es kann insbesondere eine Anpassbarkeit an unterschiedlich geformte und/oder unterschiedlich große Handwerkzeugakkus, insbesondere an Handwerkzeugakkus unterschiedlicher Energiespeicherkapazität, erreicht werden.

Insbesondere weist die Latentwärmespeichereinheit zumindest drei, insbesondere zumindest fünf, vorteilhaft zumindest acht, vorzugsweise zumindest zehn, Latentwärmespeicherelemente auf. Vorzugsweise weisen die Latentwärmespeicherelemente reversibel lösbare Verbindungsmittel, insbesondere Klettverbindungen, auf, um eine Position der Latentwärmespeicherelemente zu fixieren. Es kann insbesondere eine hohe Anpassbarkeit sowohl an klimatische und/oder saisonale Bedingungen, als auch an unterschiedliche Formen und/oder Größen des Handwerkzeugakkus erreicht werden.

Weiterhin wird vorgeschlagen, dass zumindest die drei Latentwärmespeicherelemente eine zumindest im Wesentlichen gleiche Form aufweisen. Darunter, dass zumindest zwei Objekte eine "im Wesentlichen gleiche Form" aufweisen, soll insbesondere verstanden werden, dass es zumindest jeweils eine Kongruenzabbildung zweier der Objekte aufeinander gibt, so dass jedes der Objekte zumindest 70 %, insbesondere zumindest 80 %, vorteilhaft zumindest 90 %, vorzugsweise zumindest 95 %, der Punkte des anderen Objekts umfasst. Insbesondere weisen die Objekte eine gleiche Größe, insbesondere ein gleiches Volumen und/oder zumindest im Wesentlichen gleiche Seitenlängen und/oder zumindest im Wesentlichen gleiche Winkelverhältnisse zwischen Seiten auf. Es kann insbesondere eine einfache Austauschbarkeit erreicht werden. Alternativ kann mit unterschiedlich geformten Latentwärmespeicherelementen eine erhöhte Anpassbarkeit an unterschiedlich geformte, insbesondere unterschiedlich große, Handwerkzeugakkus erreicht werden.

Ferner wird vorgeschlagen, dass die Latentwärmespeichereinheit zumindest ein Latentwärmespeicherelement aufweist, das von einer mit Latentwärmespeichermaterial gefüllten Hülle gebildet ist. Es kann insbesondere eine einfache Konstruktion erreicht werden. Insbesondere kann erreicht werden, dass lose, insbesondere flüssige und/oder granulare, Latentwärmespeichermaterialien sicher gelagert sind. Vorzugsweise ist die Hülle zumindest teilweise flexibel ausgebildet, wodurch insbesondere eine hohe Anpassbarkeit an Formen eines Handwerkzeugakkus erreicht werden kann. Insbesondere kann durch eine flexible Hülle eine Anpassbarkeit an eine thermische Ausdehnung des Latentwärmespeichermaterials erreicht werden.

Weiterhin wird vorgeschlagen, dass das Latentwärmespeichermaterial von einem Granulat gebildet ist. Unter einem Granulat soll insbesondere eine Menge, insbesondere ein Haufwerk, makroskopischer, vorzugsweise gleichartiger, Partikel verstanden werden. Vorzugsweise weisen zumindest 60 % Vol, insbesondere zumindest 70 % Vol, vorteilhaft zumindest 80 % Vol, vorzugsweise zumindest 90 % Vol, des Granulats Partikel mit einer maximalen Erstreckung von zumindest 0,1 mm, insbesondere zumindest 0,3 mm, vorteilhaft zumindest 1 mm, vorzugsweise zumindest 3 mm, auf. Insbesondere weisen zumindest 60 % Vol, insbesondere zumindest 70 % Vol, vorteilhaft zumindest 80 % Vol, vorzugsweise zumindest 90 % Vol, des Granulats Partikel mit einer maximalen Erstreckung von maximal 10 mm, insbesondere maximal 7 mm, vorteilhaft maximal 5 mm, auf. Unter "gleichartigen Partikeln" sollen insbesondere Partikel verstanden werden, die zumindest im Wesentlichen von gleichem Material gebildet sind und/oder zumindest im Wesentlichen eine gleiche Form aufweisen und/oder zumindest im Wesentlichen eine gleiche Größe aufweisen. Insbesondere ist das Granulat dazu vorgesehen, durch einen Adsorptionsübergang Wärme abzugeben bzw. aufzunehmen. Insbesondere ist das Granulat von einem porösen Material, insbesondere einem Silikat bzw. einer Silikatmatrix, gebildet. Insbesondere ist das poröse Material dazu vorgesehen, Latentwärmespeichermaterial aufzunehmen. Es kann insbesondere erreicht werden, dass unabhängig von einem Zustand des Latentwärmespeichermaterials, insbesondere fest und/oder flüssig, eine Schüttbarkeit, eine Formbarkeit und/oder ein Einschluss erhalten bleiben. Insbesondere kann eine thermische Ausdehnung kompensiert werden. Insbesondere ist das Granulat von mit Latentwärmespeichermaterial gefüllten Päckchen, Säckchen und/oder Kügelchen gebildet.

Vorteilhaft wird vorgeschlagen, dass die Hülle von einem zumindest im Wesentlichen wasserdichten Material gebildet ist. Darunter, dass die Hülle "wasserdicht" ausgebildet ist, soll insbesondere verstanden werden, dass unter einem Druck von zumindest 2 bar, insbesondere zumindest 5 bar, vorteilhaft zumindest 10 bar, vorzugsweise zumindest 20 bar, maximal 100 mg/m²h, insbesondere maximal 30 mg/m²h, vorteilhaft maximal 10 mg/m²h, vorzugsweise maximal 3 mg/m²h, Wasser und/oder Wasserdampf durch die Hülle dringen. Vorzugsweise ist die Hülle aus zumindest einem Polymer, insbesondere zumindest einem Silikon und/oder TPE und/oder einem dünnwandigen Thermoplast, gebildet. Es kann insbesondere ein sicherer Betrieb und/oder eine lange Haltbarkeit erreicht werden. Insbesondere kann ein sicherer Einschluss von Flüssigkeiten, insbesondere zumindest wasserhaltigen Flüssigkeiten und/oder Gasen, die insbesondere Teil des Latentwärmespeichermaterials sind, erreicht werden.

### Zeichnung

Weitere Vorteile ergeben sich aus der folgenden Zeichnungsbeschreibung. In der Zeichnung sind acht Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Schnitt durch ein erfindungsgemäßes System,
- Fig. 2: einen Schnitt entlang der Linie II-II in Fig. 1,
- Fig. 3: ein alternatives erfindungsgemäßes System,
- Fig. 4: ein weiteres erfindungsgemäßes System,
- Fig. 5: ein weiteres Beispiel für eine Latentwärmespeichereinheit,
- Fig. 6: ein weiteres Beispiel für eine Latentwärmespeichereinheit,
- Fig. 7: eine modulare Ausgestaltung einer Latentwärmespeichereinheit,
- Fig. 8: eine Detaildarstellung von Region VIII aus Fig. 7,
- Fig. 9: ein weiteres Beispiel für ein System mit in einem Handwerkzeug integrierter Latentwärmespeichereinheit und
- Fig. 10: ein erfindungsgemäßes System mit einer in einen Handwerkzeugakku integrierten Latentwärmespeichereinheit.

### Beschreibung der Ausführungsbeispiele

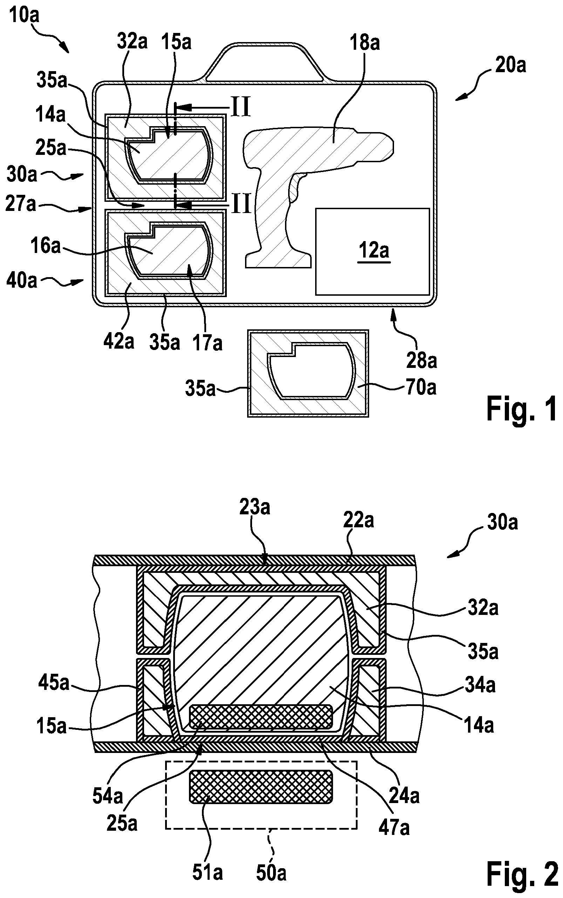

Figur 1 zeigt in einer schematischen Darstellung ein System 10a mit zwei Handwerkzeugakkus 14a, 16a. Weiterhin weist das System 10a einen Handwerkzeugkoffer 20a auf, der zwei Induktivladeaufnahmebereiche 15a, 17a aufweist, die dazu vorgesehen sind, jeweils einen in den Induktivladeaufnahmebereich 15a, 17a eingelegten Handwerkzeugakku 14a, 16a teilweise in einem Nahbereich zumindest einer Wandung 25a des Handwerkzeugkoffers 20a zu lagern (Figur 2). Ferner weist das System 10a zwei Latentwärmespeichereinheiten 30a, 40a auf, die dazu vorgesehen sind, Temperaturen der in die Induktivladeaufnahmebereiche 15a, 17a eingelegten Handwerkzeugakkus 14a, 16a zu beeinflussen. Weiterhin weist das System 10a ein Handwerkzeug 18a auf. Der Handwerkzeugkoffer 20a ist dazu vorgesehen, das Handwerkzeug 18a zu lagern und einen Transport des Handwerkzeugs 18a zu ermöglichen.

Die Latentwärmespeichereinheiten 30a, 40a weisen jeweils zwei Latentwärmespeicherelemente 32a, 34a, 42a auf. Die Latentwärmespeicherelemente 32a, 34a, 42a sind jeweils in einem Nahbereich um einen der Induktivladeaufnahmebereiche 15a, 17a angeordnet.

Die Latentwärmespeicherelemente 32a, 34a, 42a sind teilweise in Nahbereichen von Wandungen 27a, 28a des Handwerkzeugkoffers 20a angeordnet. Die Wandungen 27a, 28a bilden Mantelseiten des Handwerkzeugkoffers 20a.

Die Latentwärmespeicherelemente 32a, 34a, 42a sind dazu vorgesehen, zeitweise eine Überhitzung der Handwerkzeugakkus 14a, 16a zu vermeiden. Die Latentwärmespeicherelemente 32a, 34a der Latentwärmespeichereinheit 30a weisen gemeinsam eine Masse von 300 g auf. Die Latentwärmespeichereinheiten 30a, 40a weisen bei einer Temperatur von 41 °C eine Phasengrenze auf. Die Latentwärmespeicherelemente 32a, 34a, 42a sind dazu vorgesehen, Wärme durch einen Schmelzvorgang aufzunehmen. Die Latentwärmespeichereinheiten 30a, 40a sind jeweils dazu vorgesehen, eine Wärmemenge von 60 kJ bei einem kompletten Übergang über die Phasengrenze aufzunehmen bzw. abzugeben.

Die Latentwärmespeichereinheiten 30a, 40a sind modular aufgebaut. Das System 10a weist weitere Latentwärmespeicherelemente 70a (beispielhaft nur eines dargestellt) auf, die dazu vorgesehen sind, Latentwärmespeicherelemente 32a, 34a, 42a der Latentwärmespeichereinheiten 30a, 40a zu ersetzen, wobei die weiteren Latentwärmespeicherelemente 70a eine von den Latentwärmespeicherelementen 32a, 34a, 42a verschiedene Temperaturspezifikation aufweisen. Dazu können die Latentwärmespeicherelemente 32a, 34a, 42a den Latentwärmespeichereinheiten 30a, 40a entnommen werden. Die Latentwärmespeicherelemente 70a sind dazu vorgesehen, eine Unterkühlung zu verhindern. Die Latentwärmespeicherelemente 70a weisen eine Grenztemperatur von 5 °C auf.

In alternativen Ausgestaltungen wird auf eine modulare Ausgestaltung der Latentwärmespeichereinheiten 30a, 40a verzichtet und/oder zumindest zwei, insbesondere alle vier, der Latentwärmespeicherelemente 32a, 34a, 42a sind dazu vorgesehen, zeitweise eine Unterkühlung des Handwerkzeugakkus 14a, 16a zu vermeiden. Weiterhin ist es denkbar, dass einer der Handwerkzeugakkus 14a, 16a durch ein geeignet geformtes, weiteres Latentwärmespeicherelement ersetzt wird, um auch bei extremen Bedingungen, insbesondere besonders hohen oder besonders niedrigen Außentemperaturen, eine Funktionstüchtigkeit zu gewährleisten.

Die Latentwärmespeicherelemente 32a, 34a, 42a sind teilweise in Nahbereichen von Wandungen 23a, 25a des Handwerkzeugkoffers 20a angeordnet (Figur 2). Der Handwerkzeugkoffer 20a ist von zwei Gehäuseteilen 22a, 24a gebildet. Die Wandungen 23a, 25a sind jeweils Teil der Gehäuseteile 22a, 24a. Das Gehäuseteil 22a ist als Deckel ausgebildet. Das Gehäuseteil 24a ist als Boden ausgebildet. Beide Gehäuseteile 22a, 24a sind schalenförmig ausgebildet. Die Latentwärmespeicherelemente 32a, 42a sind mit dem Gehäuseteil 22a verbunden, werden also bei einem Öffnen des Handwerkzeugkoffers 20a mitbewegt und geben die Handwerkzeugakkus 14a, 16a frei. Die Latentwärmespeicherelemente 32a, 34a, 42a umgeben jeweils eine halbe Höhe des Handwerkzeugakkus 14a, 16a. Die Latentwärmespeicherelemente 32a, 34a, 42a bilden jeweils die Induktivladeaufnahmebereiche 15a, 17a, die dazu vorgesehen sind, die Handwerkzeugakkus 14a, 16a aufzunehmen.

Weiterhin weist das System 10a zwei Isoliereinheiten 47a auf. Die Isoliereinheiten 47a sind jeweils von einem einzelnen Isolierelement gebildet. Die Isoliereinheit 47a umgibt jeweils einen der Handwerkzeugakkus 14a, 16a an einer Unterseite. Die Isolierelemente sind von einem formstabilen, thermisch gut isolierenden Schaumstoff gebildet.

Die Handwerkzeugakkus 14a, 16a sind dazu vorgesehen, induktiv geladen zu werden. Die Handwerkzeugakkus 14a, 16a weisen jeweils eine Ladespule 54a auf. Die Ladespule 54a ist dazu vorgesehen, Energie durch die Wandung 25a und die Isoliereinheit 47a hindurch von einer korrespondierenden Ladespule 51a einer Ladestation 50a, auf die der Handwerkzeugkoffer 20a aufgelegt ist, zu empfangen. Die Ladespulen 54a sind jeweils parallel zu der Wandung 25a angeordnet. Die Ladespulen 54a sind in Nahbereichen der Wandung 25a angeordnet.

Die Latentwärmespeicherelemente 32a, 34a, 42a, 70a sind jeweils von einer mit Latentwärmespeichermaterial gefüllten Hülle 35a, 45a gebildet. Die Hüllen 35a, 45a sind jeweils von einem wasserdichten Material gebildet. Die Hüllen 35a, 45a sind aus Silikon gebildet. Die Latentwärmespeicherelemente 32a, 34a, 42a, 70a sind jeweils mit Paraffinwachsen gefüllt, die dazu vorgesehen sind, bei jeweiligen Grenztemperaturen zu schmelzen. Die Ausbildung der Hüllen 35a, 45a aus flexiblem Silikon ermöglicht eine Ausdehnung der Latentwärmespeicherelemente 32a, 34a, 42a, die durch eine Volumenänderung der Paraffinwachse bei Überschreiten der jeweiligen Grenztemperatur verursacht wird. Weiterhin ermöglicht Silikon eine ausreichende Stabilität, um eine Form der Latentwärmespeicherelemente 32a, 34a, 42a auch in flüssigem Zustand beizubehalten.

Weiterhin sind Ausgestaltungen denkbar, in denen die Latentwärmespeichereinheiten jeweils von einem einzelnen Latentwärmespeicherelement gebildet sind, das dazu vorgesehen ist, eine komplette Höhe des Handwerkzeugakkus 14a, 16a zu umgeben. Insbesondere weist eine Isoliereinheit in einer derartigen Ausgestaltung ein weiteres Isolierelement auf, das dazu vorgesehen ist, einen Wärmefluss durch das als Deckel ausgebildete Gehäuseteil 22a zu minimieren.

Weiterhin weist der Handwerkzeugkoffer 20a einen Aufnahmebereich 12a auf. Der Aufnahmebereich 12a kann insbesondere dazu verwendet werden, ein portables Ladegerät zur induktiven Ladung der Handwerkzeugakkus 14a, 16a zu transportieren. Weiterhin ist denkbar, dass der Aufnahmebereich 12a dazu vorgesehen ist, die Latentwärmespeicherelemente 70a aufzunehmen.

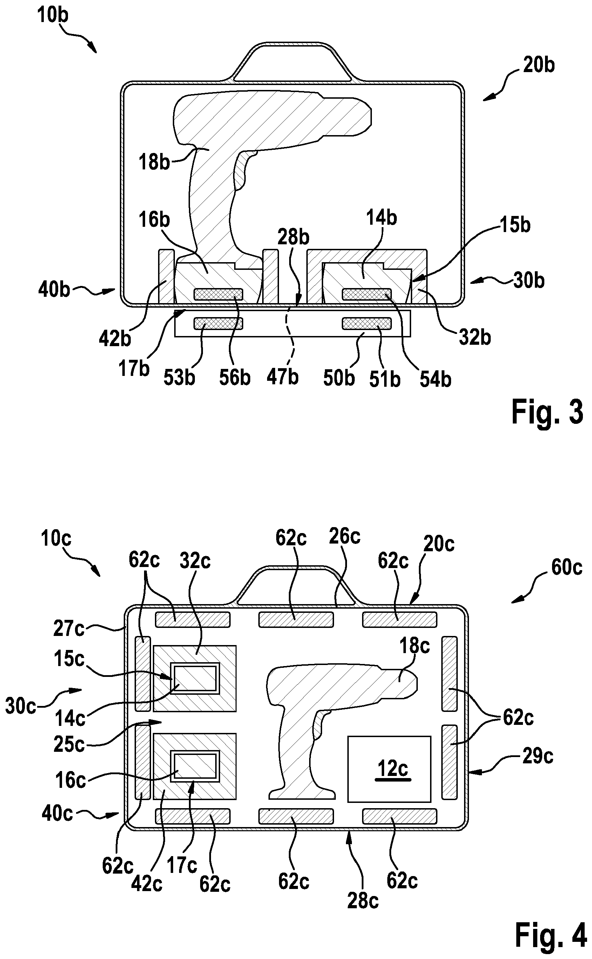

Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 2, verwiesen werden kann. Zur Unterscheidung der Ausführungsbeispiele ist der Buchstabe a den Bezugszeichen des Ausführungsbeispiels in den Figuren 1 bis 2 nachgestellt. In den Ausführungsbeispielen der Figuren 3 bis 10 ist der Buchstabe a durch die Buchstaben b bis h ersetzt.

Figur 3 zeigt eine schematische Darstellung eines Systems 10b mit zwei Handwerkzeugakkus 14b, 16b. Weiterhin weist das System 10b einen Handwerkzeugkoffer 20b auf, der zwei Induktivladeaufnahmebereiche 15b, 17b aufweist, die dazu vorgesehen sind, in die Induktivladeaufnahmebereiche 15b, 17b eingelegte Handwerkzeugakkus 14b, 16b teilweise in Nahbereichen einer Wandung 28b des Handwerkzeugkoffers 20b zu lagern. Weiterhin weist das System 10b ein Handwerkzeug 18b auf, das mit dem Handwerkzeugakku 16b gekoppelt ist. Die Wandung 28b bildet eine Mantelseite des Handwerkzeugkoffers 20b. Die Wandung 28b bildet eine Seite des Handwerkzeugkoffers 20b, die einem Tragegriff, der zu einem Transport des Handwerkzeugkoffers 20b in vertikaler Ausrichtung vorgesehen ist, gegenüber angeordnet ist. Ferner weist das System 10b zwei Latentwärmespeichereinheiten 30b, 40b auf, die dazu vorgesehen sind, Temperaturen der Handwerkzeugakkus 14b, 16b zu beeinflussen.

Die Latentwärmespeichereinheiten 30b, 40b weisen jeweils Latentwärmespeicherelemente 32b, 42b auf. Die Latentwärmespeicherelemente 32b, 42b sind jeweils in einem Nahbereich eines der Induktivladeaufnahmebereiche 15b, 17b angeordnet. Die Latentwärmespeicherelemente 32b, 42b sind dazu vorgesehen, zeitweise eine Überhitzung der Handwerkzeugakkus 14b, 16b zu vermeiden. Alternativ sind Ausgestaltungen denkbar, in denen zumindest eines der Latentwärmespeicherelemente 32b, 42b dazu vorgesehen ist, zumindest zeitweise eine Unterkühlung der Handwerkzeugakkus 14b, 16b zu vermeiden. Die Latentwärmespeicherelemente 32b, 42b sind teilweise in einem Nahbereich der Wandung 28b des Handwerkzeugkoffers 20b angeordnet.

Die Handwerkzeugakkus 14b, 16b sind dazu vorgesehen induktiv geladen zu werden. Die Handwerkzeugakkus 14b, 16b weisen jeweils eine Ladespule 54b, 56b auf, die dazu vorgesehen ist, Energie von einer korrespondierenden Ladespule 51b, 53b einer Ladestation 50b, auf die der Handwerkzeugkoffer 20b aufgestellt ist oder an der der Handwerkzeugkoffer 20b angelegt ist, zu empfangen.

In einer weiteren Ausgestaltung kann vorgesehen sein, dass das System 10b eine Isoliereinheit 47b aufweist, die die Latentwärmespeicherelemente 32b, 42b und/oder zumindest die Handwerkzeugakkus 14b, 16b zumindest teilweise umgibt. Beispielsweise könnte zumindest die Wandung 28b hohlwandig ausgebildet sein.

Figur 4 zeigt eine schematische Darstellung eines Systems 10c mit zwei Handwerkzeugakkus 14c, 16c. Weiterhin weist das System 10c einen Handwerkzeugkoffer 20c auf, der zwei Induktivladeaufnahmebereiche 15c, 17c aufweist, die dazu vorgesehen sind, in die Induktivladeaufnahmebereiche 15c, 17c eingelegte Handwerkzeugakkus 14c, 16c teilweise in einem Nahbereich zumindest einer Wandung 25c des Handwerkzeugkoffers 20c zu lagern. Die Wandung 25c bildet eine Bodenseite des Handwerkzeugkoffers 20c. Weiterhin weist das System 10c drei Latentwärmespeichereinheiten 30c, 40c, 60c auf, die dazu vorgesehen sind, Temperaturen der Handwerkzeugakkus 14c, 16c zu beeinflussen.

Die Latentwärmespeichereinheiten 30c, 40c weisen jeweils Latentwärmespeicherelemente 32c, 42c auf. Die Latentwärmespeicherelemente 32c, 42c sind jeweils in einem Nahbereich eines der Induktivladeaufnahmebereiche 15c, 17c angeordnet. Die Latentwärmespeicherelemente 32c, 42c sind dazu vorgesehen, zeitweise eine Überhitzung der Handwerkzeugakkus 14c, 16c zu vermeiden.

Die Latentwärmespeichereinheit 60c weist acht Latentwärmespeicherelemente 62c auf. Die Latentwärmespeicherelemente 62c sind in Nahbereichen von Wandungen 26c, 27c, 28c, 29c des Handwerkzeugkoffers 20c angeordnet. Die Wandungen 26c, 27c, 28c, 29c bilden Mantelseiten des Handwerkzeugkoffers 20c. Die Latentwärmespeicherelemente 62c weisen eine gleiche Form auf. Die Latentwärmespeicherelemente 62c sind dazu vorgesehen, zeitweise eine Unterkühlung der Handwerkzeugakkus 14c, 16c zu vermeiden.

Die Latentwärmespeicherelemente 62c sind dazu vorgesehen, der Latentwärmespeichereinheit 60c und dem Handwerkzeugkoffer 20c entnommen zu werden, um bei Umweltbedingungen, die eine Unterkühlung zumindest weitestgehend unmöglich machen, eine Gewichtsersparnis zu erreichen. Alternativ kann vorgesehen sein, die Latentwärmespeicherelemente 62c durch Latentwärmespeicherelemente zu ersetzen, die dazu vorgesehen sind, eine Überhitzung zumindest zeitweise zu vermeiden, um länger oder bei höheren Temperaturen eine zuverlässige Funktionalität zu gewährleisten.

Weiterhin ist denkbar, dass auch an und/oder in einer Ober- bzw. Unterseite des Handwerkzeugkoffers 20c Latentwärmespeicherelemente angeordnet sind, die dazu vorgesehen sind, eine Unterkühlung zu vermeiden.

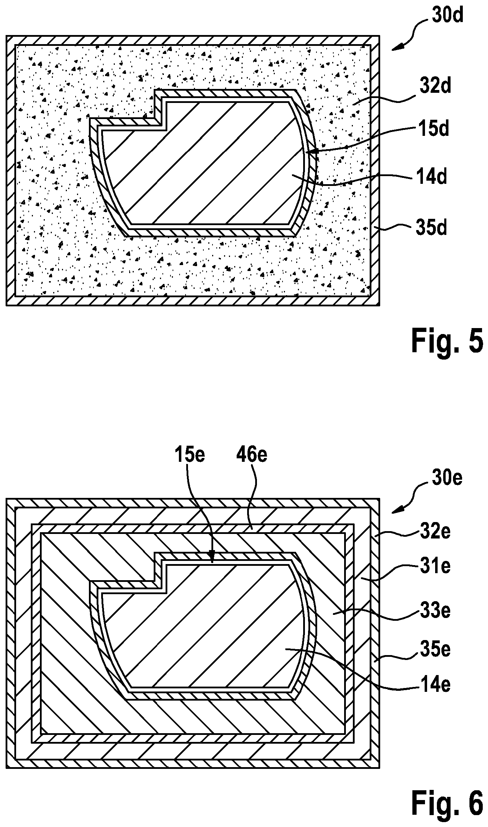

Figur 5 zeigt eine alternative Latentwärmespeichereinheit 30d, wie sie in einem System analog einer der Figuren 1 bis 4 Verwendung finden könnte, in einer schematischen Schnittdarstellung. Die Latentwärmespeichereinheit 30d weist ein Latentwärmespeicherelement 32d auf. Das Latentwärmespeicherelement 32d ist in einem Nahbereich um einen Induktivladeaufnahmebereich 15d für einen Handwerkzeugakku 14d angeordnet. Das Latentwärmespeicherelement 32d ist dazu vorgesehen, zeitweise eine Überhitzung des Handwerkzeugakkus 14d zu vermeiden. Das Latentwärmespeicherelement 32d ist dazu vorgesehen, zeitweise eine Unterkühlung des Handwerkzeugakkus 14d zu vermeiden. Das Latentwärmespeicherelement 32d, das dazu vorgesehen ist, eine Unterkühlung zu vermeiden, und das Latentwärmespeicherelement 32d, das dazu vorgesehen ist, eine Überhitzung zu vermeiden, sind einstückig ausgebildet. Das Latentwärmespeicherelement 32d ist von einer mit Latentwärmespeichermaterial gefüllten Hülle 35d gebildet. Die Hülle 35d ist von einem Material gebildet, das eine einfache Verformung erlaubt. Die Hülle 35d ist von einer Folie gebildet. Die Folie ist aus einem Silikon gebildet. Alternativ ist einer Ausgestaltung der Folie aus dünnwandigem Thermoplast denkbar. Das Latentwärmespeichermaterial ist von einem Granulat gebildet. Das Granulat ist von einer porigen Silikatmatrix gebildet und weist Partikelgrößen ähnlich denen von feinem Sand auf. Die Poren eines Anteils des Granulats sind mit Paraffin gefüllt, das eine Grenztemperatur von 3 °C aufweist. Ein übriger Anteil des Granulats ist mit Paraffin gefüllt, das eine Grenztemperatur von 42 °C aufweist. Ein Anteil an Granulat mit einer höheren Grenztemperatur beträgt 70 %. Die beiden Anteile des Granulats sind homogen vermischt. Durch die Ausgestaltung als Granulat mit einer flexiblen Hülle 35d kann eine gute Formbarkeit des Latentwärmespeicherelements 32d und somit eine gute Anpassbarkeit an unterschiedliche Formen von unterschiedlichen Handwerkzeugakkus erreicht werden. Weiterhin kann ein guter thermischer Kontakt durch einen geringen Abstand zwischen dem Latentwärmespeicherelement 32d und dem Handwerkzeugakku 14d erreicht werden.

Weiterhin sind Ausgestaltungen denkbar, in denen ein einzelnes Latentwärmespeicherelement lediglich Granulat mit einer hohen oder mit einer niedrigen Grenztemperatur aufweist. Auch sind beliebige, insbesondere an klimatische Bedingungen angepasste, Mischungsverhältnisse denkbar. Insbesondere kann ein System drei oder mehr unterschiedliche, gegeneinander austauschbare Typen von Latentwärmespeicherelementen mit unterschiedlichen Grenztemperaturen aufweisen. Insbesondere ist einer der Typen dazu vorgesehen, lediglich eine Unterkühlung zu vermeiden, und ist insbesondere dazu vorgesehen, in einer kalten Jahreszeit eingesetzt zu werden. Insbesondere ist zumindest einer der Typen dazu vorgesehen, eine Überhitzung zu vermeiden, und ist insbesondere dazu vorgesehen, in einer warmen und/oder heißen Jahreszeit eingesetzt zu werden. Vorzugsweise ist zumindest einer der Typen dazu vorgesehen, sowohl eine Überhitzung als auch eine Unterkühlung zu vermeiden, und ist insbesondere dazu vorgesehen, in einer Übergangszeit eingesetzt zu werden.

Figur 6 zeigt eine weitere alternative Latentwärmespeichereinheit 30e, wie sie in einem System analog einer der Figuren 1 bis 4 Verwendung finden könnte, in einer schematischen Schnittdarstellung. Die Latentwärmespeichereinheit 30e weist ein Latentwärmespeicherelement 32e auf. Das Latentwärmespeicherelement 32e ist in einem Nahbereich um einen Induktivladeaufnahmebereich 15e für einen Handwerkzeugakku 14e angeordnet. Das Latentwärmespeicherelement 32e ist dazu vorgesehen, zeitweise eine Überhitzung des Handwerkzeugakkus 14e zu vermeiden. Das Latentwärmespeicherelement 32e ist dazu vorgesehen, zeitweise eine Unterkühlung des Handwerkzeugakkus 14e zu vermeiden. Das Latentwärmespeicherelement 32e, das dazu vorgesehen ist, eine Unterkühlung zu vermeiden, und das Latentwärmespeicherelement 32e, das dazu vorgesehen ist, eine Überhitzung zu vermeiden, sind einstückig ausgebildet. Das Latentwärmespeicherelement 32e ist von einer mit Latentwärmespeicher-material gefüllten Hülle 35e gebildet. Das Latentwärmespeicherelement 32e ist durch eine Trennwand 46e in einen inneren Latentwärmespeicherbereich 31e und einen äußeren Latentwärmespeicherbereich 33e unterteilt. Der innere Latentwärmespeicherbereich 31e ist mit einem Latentwärmespeichermaterial gefüllt, das dazu vorgesehen ist, eine Überhitzung des Handwerkzeugakkus 14e zu vermeiden. Der äußere Latentwärmespeicherbereich 33e ist mit einem Latentwärmespeichermaterial gefüllt, das dazu vorgesehen ist, eine Unterkühlung des Handwerkzeugakkus 14e zu vermeiden. Der Latentwärmespeicherbereich 33e, der dazu vorgesehen ist, eine Unterkühlung zu vermeiden, umgibt den Handwerkzeugakku 14e und den Latentwärmespeicherbereich 31e, der dazu vorgesehen ist, eine Überhitzung zu vermeiden.

In einer weiteren Ausgestaltung sind die Latentwärmespeicherbereiche 31e, 33e als separate Latentwärmespeicherelemente, die voneinander trennbar sind, ausgebildet. Vorteilhaft ist die Latentwärmespeichereinheit modular ausgebildet und die Latentwärmespeicherelemente sind dazu vorgesehen, gegen Latentwärmespeicherelemente mit anderer Temperaturspezifikation ausgetauscht zu werden.

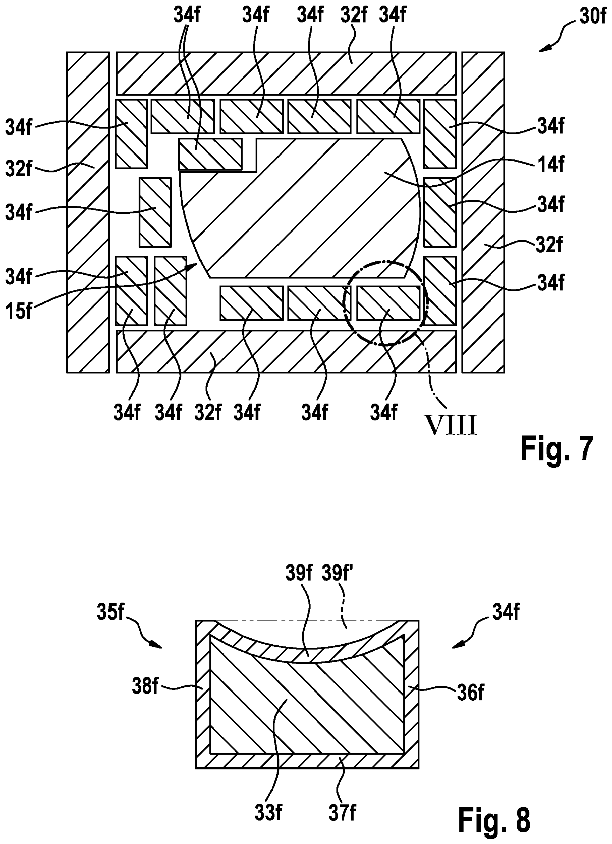

Figur 7 zeigt eine weitere Latentwärmespeichereinheit 30f, wie sie in einem System analog einer der Figuren 1 bis 4 Verwendung finden könnte, in einer schematischen Schnittdarstellung. Die Latentwärmespeichereinheit 30f ist modular aufgebaut. Die Latentwärmespeichereinheit 30f weist Latentwärmespeicherelemente 34f auf, von denen hier fünfzehn dargestellt sind. Die Latentwärmespeicherelemente 34f sind in einem Nahbereich um einen von den Latentwärmespeicherelementen 34f gebildeten Induktivladeaufnahmebereich 15f angeordnet. Der Induktivladeaufnahmebereich 15f ist dazu vorgesehen, einen Handwerkzeugakku 14f aufzunehmen. Die Latentwärmespeicherelemente 34f sind dazu vorgesehen, zeitweise eine Überhitzung des Handwerkzeugakkus 14f zu vermeiden. Die Latentwärmespeicherelemente 34f weisen eine gleiche Form auf. Die Latentwärmespeicherelemente 34f sind quaderartig ausgebildet. Die Latentwärmespeicherelemente 34f können der Latentwärmespeichereinheit 30f entnommen werden und Positionen der Latentwärmespeicherelemente 34f in der Latentwärmespeichereinheit 30f können verändert werden, um die Latentwärmespeichereinheit 30f an unterschiedliche Handwerkzeugakkus, insbesondere unterschiedlicher Formen und/oder Größen, anzupassen.

Die Latentwärmespeichereinheit 30f weist weiterhin Latentwärmespeicherelemente 32f auf, von denen hier vier dargestellt sind. Die Latentwärmespeicherelemente 32f sind dazu vorgesehen, eine Unterkühlung des Handwerkzeugakkus 14f zu vermeiden. Die Latentwärmespeicherelemente 32f, die dazu vorgesehen sind, eine Unterkühlung zu vermeiden, umgeben den Handwerkzeugakku 14f und die Latentwärmespeicherelemente 34f, die dazu vorgesehen sind, eine Überhitzung zu vermeiden, teilweise. Die Latentwärmespeicherelemente 32f weisen eine gleiche Form auf. Die Latentwärmespeicherelemente 32f sind als längliche Quader ausgebildet. Die Latentwärmespeicherelemente 32f bilden einen Rahmen der Latentwärmespeichereinheit 30f.

Figur 8 zeigt eines der Latentwärmespeicherelemente 34f in einer schematischen Schnittdarstellung. Das Latentwärmespeicherelement 34f ist von einer mit Latentwärmespeichermaterial gefüllten Hülle 35f gebildet. Das Latentwärmespeichermaterial ist dazu vorgesehen, Wärme durch einen Schmelzvorgang aufzunehmen. Die Hülle bildet eine Latentwärmespeicherbereich 33f, in dem das Latentwärmespeichermaterial aufgenommen ist. Das Latentwärmespeichermaterial ist ein Paraffin mit einer Grenztemperatur von 42 °C, die einen Schmelzpunkt bestimmt. Die Hülle 35f ist von einem wasserdichten Material gebildet. Eine der Hüllwände 39f ist flexibel ausgebildet. Die übrigen Hüllwände 36f, 37f, 38f bilden einen steifen Kasten. In einem erstarrten Zustand weist das Paraffin ein geringeres Volumen auf als im flüssigen Zustand. In erstarrtem Zustand des Paraffins ist die flexible Hüllwand 39f konvex verformt. Durch Ausdehnung des Paraffins beim Schmelzen nimmt die flexible Hüllwand 39f' eine ebene Form an.

Alternativ kann es vorgesehen sein, dass lediglich Kanten der Hülle 35f steif ausgebildet sind und einen Quader aufspannen und alle Hüllwände 36f, 37f, 38f, 39f flexibel ausgebildet sind.

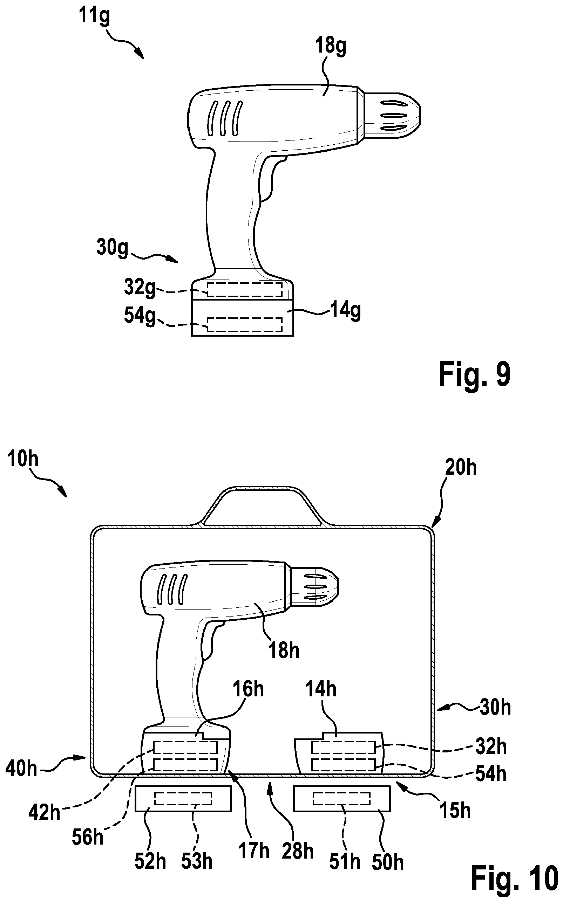

Figur 9 zeigt ein System 11g mit einem Handwerkzeug 18g und einem mit dem Handwerkzeug 18g gekoppelten Handwerkzeugakku 14g. Der Handwerkzeugakku 14g ist dazu vorgesehen, induktiv geladen zu werden. Der Handwerkzeugakku 14g weist in einem Nahbereich seiner Unterseite eine Ladespule 54g auf, die dazu vorgesehen ist, von einer korrespondierenden Ladespule einer Ladestation Energie zu empfangen. Das System 11g weist weiterhin eine Latentwärmespeichereinheit 30g auf, die dazu vorgesehen ist, eine Temperatur des Handwerkzeugakkus 14g zu beeinflussen. Die Latentwärmespeichereinheit 30g weist ein Latentwärmespeicherelement 32g auf, das dazu vorgesehen ist, eine Überhitzung des Handwerkzeugakkus 14g während eines Betriebs und während eines Ladevorgangs in gekoppeltem Zustand zu vermeiden. Das Latentwärmespeicherelement 32g ist in dem Handwerkzeug 18g angeordnet. Das Latentwärmespeicherelement 32g ist in einem Bereich angeordnet, der dazu vorgesehen ist, den Handwerkzeugakku 14g an das Handwerkzeug 18g zu koppeln.

Figur 10 zeigt ein weiteres System 10h mit zwei Handwerkzeugakkus 14h, 16h. Das System 10h weist weiterhin einen Handwerkzeugkoffer 20h auf, der zwei Induktivladeaufnahmebereiche 15h, 17h aufweist, die dazu vorgesehen sind, in die Induktivladeaufnahmebereiche 15h, 17h eingelegte Handwerkzeugakkus 14h, 16h in einem Nahbereich einer Wandung 28h des Handwerkzeugkoffers 20h zu lagern. Ferner weist das System 10h zwei Latentwärmespeichereinheiten 30h, 40h auf, die dazu vorgesehen sind, Temperaturen jeweils eines der Handwerkzeugakkus 14h, 16h zu beeinflussen. Die Latentwärmespeichereinheiten 30h, 40h weisen jeweils ein Latentwärmespeicherelement 32h, 42h auf. Die Latentwärmespeicherelemente 32h, 42h sind jeweils in den Handwerkzeugakkus 14h, 16h angeordnet. Die Latentwärmespeicherelemente 32h, 42h sind dazu vorgesehen, zeitweise eine Überhitzung des jeweiligen Handwerkzeugakkus 14h, 16h zu vermeiden. Das System 10h weist ein Handwerkzeug 18h auf, das mit dem Handwerkzeugakku 16h gekoppelt ist.

Die Handwerkzeugakkus 14h, 16h sind dazu vorgesehen, induktiv geladen zu werden. Die Handwerkzeugakkus 14h, 16h weisen jeweils eine Ladespule 54h, 56h auf, die dazu vorgesehen ist, Energie von einer korrespondierenden Ladespule 51h, 53h einer Ladestation 50h, auf die der Handwerkzeugkoffer 20h aufgestellt ist oder an der der Handwerkzeugkoffer 20h angelegt ist, zu empfangen.

Weiterhin ist es denkbar, dass die Latentwärmespeichereinheiten 30h, 40h analog Figur 3 weitere Latentwärmespeicherelemente aufweisen, die in Nahbereichen der Induktivladeaufnahmebereiche 15h, 17h angeordnet sind. Vorzugsweise sind diese weiteren Latentwärmespeicherelemente dazu vorgesehen, zeitweise eine Unterkühlung der Handwerkzeugakkus 14h, 16h zu vermeiden.

## Patentansprüche

1. Handwerkzeugkoffer (20a; 20b; 20c; 20h) mit zumindest einem Induktivladeaufnahmebereich (15a, 17a; 15b, 17b; 15c, 17c; 15d; 15e; 15f; 15h), der dazu vorgesehen ist, einen in den Induktivladeaufnahmebereich (15a, 17a; 15b, 17b; 15c, 17c; 15d; 15e; 15f; 15h) eingelegten Handwerkzeugakku (14a, 16a; 14b, 16b; 14c, 16c; 14d; 14e; 14f; 14h, 16h) zumindest teilweise in einem Nahbereich zumindest einer Wandung (25a; 28b; 25c; 28h) des Handwerkzeugkoffers (20a; 20b; 20c; 20h) aufzunehmen und ein induktives Laden zu unterstützen, **dadurch gekennzeichnet, dass** eine Latentwärmespeichereinheit (30a, 40a; 30b, 40b; 30c, 40c, 60c; 30d; 30e; 30f; 30h, 40h)-zur Beeinflussung einer Temperatur des zumindest einen Handwerkzeugakkus (14a, 16a; 14b, 16b; 14c, 16c; 14d; 14e; 14f; 14h, 16h) vorgesehen ist, wobei die Latentwärmespeichereinheit (30a, 40a; 30b, 40b; 30c, 40c; 30d; 30e; 30f) zumindest ein Latentwärmespeicherelement (32a, 34a, 42a; 32b, 42b; 32c, 42c; 32d; 32e; 32f) aufweist, das in dem Nahbereich der Wandung (25a; 28b; 25c; 28h) zumindest teilweise um den zumindest einen Induktivladeaufnahmebereich (15a, 17a; 15b, 17b; 15c, 17c; 15d; 15e; 15f) angeordnet ist.

2. Handwerkzeugkoffer (20a; 20b; 20c; 20h) nach Anspruch 1, **dadurch gekennzeichnet, dass** das Latentwärmespeicherelement (32a, 34a, 42a; 32b, 42b; 32c, 42c; 32d; 32e; 34f; 32h, 34h) dazu vorgesehen ist, zumindest zeitweise eine Überhitzung des Handwerkzeugakkus (14a, 16a; 14b, 16b; 14c, 16c; 14d; 14e; 14f; 14h, 16h) zu vermeiden.

3. Handwerkzeugkoffer (20a; 20b; 20c; 20h) nach einem der vorhergehenden Ansprüche, **dadurch gekennzeichnet, dass** das Latentwärmespeicherelement (62c; 32d; 32e; 32f) dazu vorgesehen ist, zumindest zeitweise eine Unterkühlung des Handwerkzeugakkus (14c, 16c; 14d; 14e; 14f) zu vermeiden.

4. Handwerkzeugkoffer (20a; 20b; 20c; 20h) nach einem der vorhergehenden Ansprüche, **gekennzeichnet durch** zumindest eine Isoliereinheit (47a; 47b), die das Latentwärmespeicherelement (32a, 34a, 42a; 32b, 42b) und/oder den zumindest einen Handwerkzeugakku (14a, 16a; 14b, 16b) zumindest teilweise umgibt.

5. Handwerkzeugkoffer (20a; 20b; 20c; 20h) nach den Ansprüchen 2 und 3, **dadurch gekennzeichnet, dass** die Latentwärmespeicherelemente (32d; 32e) zur Vermeidung der zumindest zeitweisen Unterkühlung und Überhitzung einstückig ausgebildet sind.

6. Handwerkzeugkoffer (20a; 20b; 20c; 20h) nach einem der vorhergehenden Ansprüche, **dadurch gekennzeichnet, dass** das Latentwärmespeicherelement (32a, 34a, 42a; 32b, 42b; 32c, 42c, 62c; 32d; 32e; 32f; 32h, 34h) dazu vorgesehen ist, Wärme durch einen Schmelzvorgang aufzunehmen und/oder abzugeben.

7. Handwerkzeugkoffer (20a; 20b; 20c; 20h) nach einem der vorhergehenden Ansprüche, **dadurch gekennzeichnet, dass** die Latentwärmespeichereinheit (30a, 40a; 30f) modular aufgebaut ist.

8. Handwerkzeugkoffer (20a; 20b; 20c; 20h) nach Anspruch 7,
**gekennzeichnet durch** ein zweites Latentwärmespeicherelement (70a), das dazu vorgesehen ist, ein erstes Latentwärmespeicherelement (32a, 34a, 42a) der Latentwärmespeichereinheit (30a, 40a) zu ersetzen, wobei das zweite Latentwärmespeicherelement (70a) eine von dem ersten Latentwärmespeicherelement (32a, 34a, 42a) verschiedene Temperaturspezifikation aufweist.

9. Handwerkzeugkoffer (20a; 20b; 20c; 20h) nach Anspruch 7, **dadurch gekennzeichnet, dass** das Latentwärmespeicherelement (32a, 34a, 42a, 70a; 32f, 34f) der Latentwärmespeichereinheit (30a, 40a; 30f) entnehmbar ist und/oder dessen Position in der Latentwärmespeichereinheit (30f) veränderbar ist.

10. Handwerkzeugkoffer (20a; 20b; 20c; 20h) nach einem der vorhergehenden Ansprüche, **dadurch gekennzeichnet, dass** die Latentwärmespeichereinheit (60c; 30f) zumindest drei Latentwärmespeicherelemente (62c; 32f, 34f) aufweist.

11. Handwerkzeugkoffer (20a; 20b; 20c; 20h) nach Anspruch 10, **dadurch gekennzeichnet, dass** die zumindest drei Latentwärmespeicherelemente (62c; 32f, 34f) eine im Wesentlichen gleiche Form aufweisen.

12. Handwerkzeugkoffer (20a; 20b; 20c; 20h) nach einem der vorhergehenden Ansprüche, **dadurch gekennzeichnet, dass** das Latentwärmespeicherelement (32a, 34a, 42a; 32b, 42b; 32c, 42c; 32d; 32e; 34e, 34f; 32h, 34h) von einer mit Latentwärmespeichermaterial gefüllten Hülle (35a, 45a; 35d; 35e; 35f) gebildet ist.

13. Handwerkzeugkoffer (20a; 20b; 20c; 20h) nach Anspruch 12, **dadurch gekennzeichnet, dass** das Latentwärmespeichermaterial des Latentwärmespeicherelements (32d) von einem Granulat gebildet ist.

14. Handwerkzeugkoffer (20a; 20b; 20c; 20h) nach Anspruch 12, **dadurch gekennzeichnet, dass** die Hülle (35a, 45a; 35d; 35e; 35f) des Latentwärmespeicherelements (32a, 34a, 42a; 32b, 42b; 32c, 42c; 32d; 32e; 34e, 34f; 32h, 34h) von einem zumindest im Wesentlichen wasserdichten Material gebildet ist.

15. System mit einem Handwerkzeugakku (14a, 16a; 14b, 16b; 14c, 16c; 14d; 14e; 14f; 14h, 16h) und mit einem Handwerkzeugkoffer (20a; 20b; 20c; 20h) nach einem der vorhergehenden Ansprüche zum induktiven Laden des Handwerkzeugakkus (14a, 16a; 14b, 16b; 14c, 16c; 14d; 14e; 14f; 14h, 16h).

## Claims

1. Portable-tool case (20a; 20b; 20c; 20h) having at least one inductive charging receiving region (15a, 17a; 15b, 17b; 15c, 17c; 15d; 15e; 15f; 15h) which is intended to receive a portable-tool rechargeable battery (14a, 16a; 14b, 16b; 14c, 16c; 14d; 14e; 14f; 14h, 16h), introduced into the inductive charging receiving region (15a, 17a; 15b, 17b; 15c, 17c; 15d; 15e; 15f; 15h), at least partially in a vicinity of at least one wall (25a; 28b; 25c; 28h) of the portable-tool case (20a; 20b; 20c; 20h) and to support inductive charging, **characterized in that** a latent heat storage unit (30a, 40a; 30b, 40b; 30c, 40c, 60c; 30d; 30e; 30f; 30h, 40h) for influencing a temperature of the at least one portable-tool rechargeable battery (14a, 16a; 14b, 16b; 14c, 16c; 14d; 14e; 14f; 14h, 16h) is provided, wherein the latent heat storage unit (30a, 40a; 30b, 40b; 30c, 40c; 30d; 30e; 30f) has at least one latent heat storage element (32a, 34a, 42a; 32b, 42b; 32c, 42c; 32d; 32e; 32f) which is arranged in the vicinity of the wall (25a; 28b; 25c; 28h) at least partially around the at least one inductive charging receiving region (15a, 17a; 15b, 17b; 15c, 17c; 15d; 15e; 15f) .

2. Portable-tool case (20a; 20b; 20c; 20h) according to Claim 1, **characterized in that** the latent heat storage element (32a, 34a, 42a; 32b, 42b; 32c, 42c; 32d; 32e; 34f; 32h, 34h) is intended to prevent overheating of the portable-tool rechargeable battery (14a, 16a; 14b, 16b; 14c, 16c; 14d; 14e; 14f; 14h, 16h) at least temporarily.

3. Portable-tool case (20a; 20b; 20c; 20h) according to either of the preceding claims, **characterized in that** the latent heat storage element (62c; 32d; 32e; 32f) is intended to prevent undercooling of the portable-tool rechargeable battery (14c, 16c; 14d; 14e; 14f) at least temporarily.

4. Portable-tool case (20a; 20b; 20c; 20h) according to one of the preceding claims, **characterized by** at least one insulating unit (47a; 47b) which surrounds the latent heat storage element (32a, 34a, 42a; 32b, 42b) and/or the at least one portable-tool rechargeable battery (14a, 16a; 14b, 16b) at least partially.

5. Portable-tool case (20a; 20b; 20c; 20h) according to Claims 2 and 3, **characterized in that** the latent heat storage elements (32d; 32e) for preventing at least temporary undercooling and overheating are formed in one piece.

6. Portable-tool case (20a; 20b; 20c; 20h) according to one of the preceding claims, **characterized in that** the latent heat storage element (32a, 34a, 42a; 32b, 42b; 32c, 42c, 62c; 32d; 32e; 32f; 32h, 34h) is intended to absorb and/or emit heat by way of a melting process.

7. Portable-tool case (20a; 20b; 20c; 20h) according to one of the preceding claims, **characterized in that** the latent heat storage unit (30a, 40a; 30f) is of modular construction.

8. Portable-tool case (20a; 20b; 20c; 20h) according to Claim 7, **characterized by** a second latent heat storage element (70a), which is intended to replace a first latent heat storage element (32a, 34a, 42a) of the latent heat storage unit (30a, 40a), wherein the second latent heat storage element (70a) has a different temperature specification from the first latent heat storage element (32a, 34a, 42a).

9. Portable-tool case (20a; 20b; 20c; 20h) according to Claim 7, **characterized in that** the latent heat storage element (32a, 34a, 42a, 70a; 32f, 34f) of the latent heat storage unit (30a, 40a; 30f) is removable and/or its position in the latent heat storage unit (30f) is changeable.

10. Portable-tool case (20a; 20b; 20c; 20h) according to one of the preceding claims, **characterized in that** the latent heat storage unit (60c; 30f) has at least three latent heat storage elements (62c; 32f, 34f) .

11. Portable-tool case (20a; 20b; 20c; 20h) according to Claim 10, **characterized in that** the at least three latent heat storage elements (62c; 32f, 34f) are substantially the same shape.

12. Portable-tool case (20a; 20b; 20c; 20h) according to one of the preceding claims, **characterized in that** the latent heat storage element (32a, 34a, 42a; 32b, 42b; 32c, 42c; 32d; 32e, 34e; 34f; 32h, 34h) is formed by a shell (35a, 45a; 35d; 35e; 35f) filled with latent heat storage material.

13. Portable-tool case (20a; 20b; 20c; 20h) according to Claim 12, **characterized in that** the latent heat storage material of the latent heat storage element (32d) is formed by granules.

14. Portable-tool case (20a; 20b; 20c; 20h) according to Claim 12, **characterized in that** the shell (35a, 45a; 35d; 35e; 35f) of the latent heat storage element (32a, 34a, 42a; 32b, 42b; 32c, 42c; 32d; 32e, 34e; 34f; 32h, 34h) is formed by an at least substantially watertight material.

15. System having a portable-tool rechargeable battery (14a, 16a; 14b, 16b; 14c, 16c; 14d; 14e; 14f; 14h, 16h) and having a portable-tool case (20a; 20b; 20c; 20h) according to one of the preceding claims for inductive charging of the portable-tool rechargeable battery (14a, 16a; 14b, 16b; 14c, 16c; 14d; 14e; 14f; 14h, 16h).

## Revendications

1. Coffret à outil à main (20a ; 20b ; 20c ; 20h), ledit coffret comprenant au moins une zone de réception et de charge par induction (15a, 17a ; 15b, 17b ; 15c, 17c ; 15d ; 15e ; 15f ; 15h) qui est prévue pour recevoir une batterie d'outil à main (14a, 16a ; 14b, 16b ; 14c, 16c ; 14d ; 14e ; 14f ; 14h, 16h), insérée dans la zone de réception et de charge par induction (15a, 17a ; 15b, 17b ; 15c, 17c ; 15d ; 15e ; 15f ; 15h), au moins partiellement au voisinage d'au moins une paroi (25a ; 28b ; 25c ; 28h) du coffret à outil à main (20a ; 20b ; 20c ; 20h) et pour favoriser une charge par induction, **caractérisé en ce qu'**une unité de stockage de chaleur latente (30a, 40a ; 30b, 40b ; 30c, 40c, 60c ; 30d ; 30e ; 30f ; 30h, 40h) est prévue pour influer sur une température de l'au moins une batterie d'outil à main (14a, 16a ; 14b, 16b ; 14c, 16c ; 14d ; 14e ; 14f ; 14h, 16h), l'unité de stockage de chaleur latente (30a, 40a ; 30b, 40b ; 30c, 40c ; 30d ; 30e ; 30f) comportant au moins un élément de stockage de chaleur latente (32a, 34a, 42a ; 32b, 42b ; 32c, 42c ; 32d ; 32e ; 32f) qui est disposé au voisinage de la paroi (25a ; 28b ; 25c ; 28h) au moins partiellement autour de l'au moins une zone de réception et de charge par induction (15a, 17a ; 15b, 17b ; 15c, 17c ; 15d ; 15e ; 15f).

2. Coffret à outil à main (20a ; 20b ; 20c ; 20h) selon la revendication 1, **caractérisé en ce que** l'élément de stockage de chaleur latente (32a, 34a, 42a ; 32b, 42b ; 32c, 42c ; 32d ; 32e ; 34f ; 32h, 34h) est prévu pour éviter au moins temporairement un échauffement excessif de la batterie d'outil à main (14a, 16a ; 14b, 16b ; 14c, 16c ; 14d ; 14e ; 14f ; 14h, 16h).

3. Coffret à outil à main (20a ; 20b ; 20c ; 20h) selon l'une des revendications précédentes, **caractérisé en ce que** l'élément de stockage de chaleur latente (62c ; 32d ; 32e ; 32f) est prévu pour éviter au moins temporairement un refroidissement excessif de la batterie d'outil à main (14c, 16c ; 14d ; 14e ; 14f).

4. Coffret à outil à main (20a ; 20b ; 20c ; 20h) selon l'une des revendications précédentes, **caractérisé par** au moins une unité d'isolation (47a ; 47b) qui entoure au moins partiellement l'élément de stockage de chaleur latente (32a, 34a, 42a ; 32b, 42b) et/ou l'au moins une batterie d'outil à main (14a, 16a ; 14b, 16b) .

5. Coffret à outil à main (20a ; 20b ; 20c ; 20h) selon les revendications 2 et 3, **caractérisé en ce que** les éléments de stockage de chaleur latente (32d ; 32e) sont formés d'une seule pièce pour éviter le refroidissement excessif et l'échauffement excessif au moins temporaire.

6. Coffret à outil à main (20a ; 20b ; 20c ; 20h) selon l'une des revendications précédentes, **caractérisé en ce que** l'élément de stockage de chaleur latente (32a, 34a, 42a ; 32b, 42b ; 32c, 42c, 62c ; 32d ; 32e ; 32f ; 32h, 34h) est prévu pour absorber et/ou dégager de la chaleur par un processus de fusion.

7. Coffret à outil à main (20a ; 20b ; 20c ; 20h) selon l'une des revendications précédentes, **caractérisé en ce que** l'unité de stockage de chaleur latente (30a, 40a ; 30f) est de construction modulaire.

8. Coffret à outil à main (20a ; 20b ; 20c ; 20h) selon la revendication 7, **caractérisé par** un deuxième élément de stockage de chaleur latente (70a) qui est prévu pour remplacer un premier élément de stockage de chaleur latente (32a, 34a, 42a) de l'unité de stockage de chaleur latente (30a, 40a), le deuxième élément de stockage de chaleur latente (70a) présentant une spécification de température différente de celle du premier élément de stockage de chaleur latente (32a, 34a, 42a).

9. Coffret à outil à main (20a ; 20b ; 20c ; 20h) selon la revendication 7, **caractérisé en ce que** l'élément de stockage de chaleur latente (32a, 34a, 42a, 70a ; 32f, 34f) peut être retiré de l'unité de stockage de chaleur latente (30a, 40a ; 30f) et/ou sa position peut être modifiée dans l'unité de stockage de chaleur latente (30f).

10. Coffret à outil à main (20a ; 20b ; 20c ; 20h) selon l'une des revendications précédentes, **caractérisé en ce que** l'unité de stockage de chaleur latente (60c ; 30f) comporte au moins trois éléments de stockage de chaleur latente (62c ; 32f, 34f).

11. Coffret à outil à main (20a ; 20b ; 20c ; 20h) selon la revendication 10, **caractérisé en ce que** les au moins trois éléments de stockage de chaleur latente (62c ; 32f, 34f) ont sensiblement la même forme.

12. Coffret à outil à main (20a ; 20b ; 20c ; 20h) selon l'une des revendications précédentes, **caractérisé en ce que** l'élément de stockage de chaleur latente (32a, 34a, 42a ; 32b, 42b ; 32c, 42c ; 32d ; 32e ; 34e, 34f ; 32h, 34h) est formé par une enveloppe (35a, 45a ; 35d ; 35e ; 35f) remplie de matériau de stockage de chaleur latente.

13. Coffret à outil à main (20a ; 20b ; 20c ; 20h) selon la revendication 12, **caractérisé en ce que** le matériau de stockage de chaleur latente de l'élément de stockage de chaleur latente (32d) est formé par un granulat.

14. Coffret à outil à main (20a ; 20b ; 20c ; 20h) selon la revendication 12, **caractérisé en ce que** le couvercle (35a, 45a ; 35d ; 35e ; 35f) de l'élément de stockage de chaleur latente (32a, 34a, 42a ; 32b, 42b ; 32c, 42c ; 32d ; 32e ; 34e, 34f ; 32h, 34h) est formé par un matériau au moins sensiblement imperméable à l'eau.

15. Système comprenant une batterie d'outil à main (14a, 16a ; 14b, 16b ; 14c, 16c ; 14d ; 14e ; 14f ; 14h, 16h) et un coffret d'outil à main (20a ; 20b ; 20c ; 20h) selon l'une des revendications précédentes et destiné à charger par induction la batterie d'outil à main (14a, 16a ; 14b, 16b ; 14c, 16c ; 14d ; 14e ; 14f ; 14h, 16h).
